# EUROPÄISCHE PATENTANMELDUNG

(11) **EP 3 929 889 A1**
(43) Veröffentlichungstag der Anmeldung: **29.12.2021**
(21) Anmeldenummer: 21173927.1
(22) Anmeldetag: 14.05.2021
(51) Int. Cl.: G07F 13/02, G01S 5/02, G06Q 20/32

(54) **KRAFTSTOFFABGABESYSTEM**

(30) Priorität: 26.06.2020 DE 102020116931
(71) Anmelder: Scheidt & Bachmann GmbH, 41238 Mönchengladbach (DE)
(72) Erfinder: MILLER, Dr. Norbert, 41063 Mönchengladbach (DE); RÜSSMANN, Maximilian, 52062 Aachen (DE)
(74) Vertreter: Cohausz & Florack

(57) **Zusammenfassung**

Die Anmeldung betrifft ein Kraftstoffabgabesystem (100, 200, 500, 600, 700), umfassend mindestens eine Kraftstoffabgabeanordnung (174, 674, 774) mit mindestens einem ersten Kraftstoffabgabepunkt (102, 602.1, 602.2, 602.3, 702.1, 702.2, 702.3), eingerichtet zur Abgabe von Kraftstoff an ein Fahrzeug (118), wobei das Kraftstoffabgabesystem (100, 200, 500, 600, 700) mindestens eine erste zumindest dem ersten Kraftstoffabgabepunkt (102, 602.1, 602.2, 602.3, 702.1, 702.2, 702.3) zuordenbare Gruppenantennenanordnung (108, 208, 308, 308.1, 308.2, 508, 608.1, 608.2, 708.1, 708.2) umfasst, eingerichtet zum Verarbeiten mindestens eines Informationssignals (234, 446, 562, 564.1, 564.2, 564.3, 662.1, 662.2, 734), enthaltend mindestens einen modulierten Signalabschnitt (458) und mindestens einen unmodulierten Signalabschnitt (456), wobei die erste Gruppenantennenanordnung (108, 208, 308, 308.1, 308.2, 508, 608.1, 608.2, 708.1, 708.2) eine Mehrzahl von benachbart zueinander angeordneten Forecourt-Antennen (110, 210, 510) umfasst.

## Beschreibung

Die Anmeldung betrifft ein Kraftstoffabgabesystem, umfassend mindestens eine Kraftstoffabgabeanordnung mit mindestens einem ersten Kraftstoffabgabepunkt, eingerichtet zur Abgabe von Kraftstoff an ein Fahrzeug. Darüber hinaus betrifft die Anmeldung ein Verfahren zum Betreiben eines Kraftstoffabgabesystems, eine Kraftstoffabgabeanwendung, ein Verfahren zum Betreiben einer Kraftstoffabgabeanwendung und ein mobiles Endgerät.

Kraftstoffabgabesysteme mit mindestens einer Kraftstoffabgabeanordnung mit mindestens einem ersten Kraftstoffabgabepunkt zur Abgabe von Kraftstoff an ein Fahrzeug sind aus dem Stand der Technik bekannt.

Ein Beispiel eines derartigen Systems ist ein Tankstellensystem. Ein Tankstellensystem kann als Kraftstoffabgabeanordnung eine Tankstelle umfassen. Eine Tankstelle umfasst als Kraftstoffabgabepunkt mindestens einen Zapfpunkt, in der Regel eine Mehrzahl von Zapfpunkten, eingerichtet zum Abgeben von Kraftstoff.

Ferner kann eine Tankstelle mindestens einen Abstellbereich umfassen. Ein Nutzer kann sein zu tankendes Fahrzeug in dem Abstellbereich abstellen, um einen an dem Abstellbereich angeordneten Zapfpunkt zum Abgeben von Kraftstoff zu verwenden, also insbesondere zum Tanken des Fahrzeugs. Nach dem Tanken bzw. dem Tankvorgang bezahlt der Nutzer an einer Abrechnungseinrichtung bzw. einem Zahlpunkt (z.B. Kasse innerhalb eines Tankstellengebäudes) der Tankstelle unter Angabe der Kraftstoffabgabepunktkennung, insbesondere einer Zapfpunktkennung (so genannte Zapfpunktnummer), den Preis für den getankten Kraftstoff. Umgangssprachlich wird die Zapfpunktnummer auch "Säulennummer" genannt, was jedoch nicht korrekt ist, da eine Kraftstoffabgabevorrichtung in Form einer Zapfsäule mehrere Zapfpunkte aufweisen kann.

Um den Tankvorgang nutzerfreundlicher zu gestalten, sind Verfahren zum Betreiben von Tankstellensystemen bekannt, bei denen ein dem Nutzer zugeordnetes mobiles Endgerät verwendet wird. Ein solches Verfahren wird beispielsweise in dem Dokument US 9 076 139 B2 beschrieben. Bei derartigen Verfahren verfügt ein Tankstellensystem über mindestens eine Auswerteanordnung, die insbesondere mindestens ein Auswertemodul in Form eines Servers umfassen kann, um beispielsweise einen durchgeführten Tankvorgang auszuwerten und abzurechnen.

Hierzu wird der für den Tankvorgang zu verwendende Zapfpunkt (bzw. die Zapfpunktkennung dieses Zapfpunkts) nur durch eine Interaktion des Nutzers mit seinem mobilen Endgerät bestimmt, wie nachfolgend ausgeführt wird: Nachdem der Nutzer sein zu tankendes Fahrzeug vor einem Zapfpunkt abgestellt hat, aktiviert er eine auf dem mobilen Endgerät installierte Kraftstoffabgabeanwendung (insbesondere bei Tankstellen auch Tankanwendung genannt). Dann identifiziert der Nutzer den Zapfpunkt, beispielsweise durch ein Erfassen eines an dem Zapfpunkt angeordneten optischen Codes (z.B. QR-Code) mittels des mobilen Endgeräts und der darauf installierten Kraftstoffabgabeanwendung. Zumindest basierend auf diesen Daten kann die Auswerteanordnung den vom Nutzer identifizierten Zapfpunkt für einen Tankvorgang freigeben und/oder einen Abrechnungsvorgang durchführen.

Derartige Verfahren und Tankstellensysteme erfordern jedoch eine erhebliche manuelle Interaktion des Nutzers (z.B. Aktivieren der installierten Kraftstoffabgabeanwendung, Einlesen einer Zapfpunktkennung mit Hilfe des mobilen Endgeräts, Kommunizieren mit der Auswerteanordnung etc.), so dass nur eine geringe Nutzerfreundlichkeit gegeben ist.

Zudem ist die Fehler- und Manipulationssicherheit bei derartigen Verfahren gering, da die Identifizierung des Zapfpunktes ausschließlich durch das mobile Endgerät durchgeführt wird, welches dem Nutzer zugeordnet ist. So kann/können das mobile Endgerät, die an einem Zapfpunkt angebrachten Zapfpunktkennung (z.B. optischer Code) und/oder die auf dem mobilen Endgerät installierte Kraftstoffabgabeanwendung manipuliert werden. Durch eine derartige Manipulation können Zapfpunkte missbräuchlich abgerechnet werden mit Nutzern, die dort gar nicht getankt haben. Auch kann die Ursache für eine fehlerhafte Abrechnung ein Nutzerfehler bei der Identifizierung des Zapfpunktes sein.

Aus der Druckschrift DE 10 2018 101414 A1 ist zwar ein Tankstellensystem bekannt, bei der der Nutzerkomfort und gleichzeitig die Fehler- und Manipulationssicherheit erhöht sind, indem neben dem mobilen Endgerät eine zweite Datenquelle zur Bestimmung des Zapfpunkts herangezogen wird, nämlich in Form einer optischen Erfassungseinrichtung der Tankstelle. Doch auch bei diesem System kann es, beispielsweise aufgrund von nicht vermeidbaren Ungenauigkeiten bei der Auswertung der Kamerabilder, weiter zu Fehlern bei der Zuordnung von Zapfpunkten zu Fahrzeugen bzw. dem jeweiligen Nutzer des Fahrzeugs kommen. Zudem ist der Installationsaufwand aufgrund der erforderlichen zusätzlichen optischen Erfassungseinrichtung hoch.

Daher liegt der Anmeldung die Aufgabe zugrunde, ein Kraftstoffabgabesystem bereitzustellen, das einen zuverlässigeren Betrieb bei gleichzeitig hohem Nutzerkomfort ermöglicht.

Die Aufgabe wird gemäß einem ersten Aspekt der Anmeldung gelöst durch ein Kraftstoffabgabesystem nach Anspruch 1. Das Kraftstoffabgabesystem umfasst mindestens eine Kraftstoffabgabeanordnung mit mindestens einem ersten Kraftstoffabgabepunkt, eingerichtet zur Abgabe von Kraftstoff an ein Fahrzeug. Das Kraftstoffabgabesystem umfasst mindestens eine erste zumindest dem ersten Kraftstoffabgabepunkt zuordenbare Gruppenantennenanordnung. Die Gruppenantennenanordnung ist eingerichtet zum Verarbeiten mindestens eines Informationssignals, enthaltend mindestens einen modulierten Signalabschnitt und mindestens einen unmodulierten Signalabschnitt. Die erste Gruppenantennenanordnung umfasst eine Mehrzahl von benachbart zueinander angeordneten Forecourt-Antennen.

Indem im Gegensatz zum Stand der Technik anmeldungsgemäß ein Kraftstoffabgabesystem mit einer Kraftstoffabgabeanordnung bereitgestellt wird, die mindestens einen Kraftstoffabgabepunkt umfasst, wobei dem mindestens einen Kraftstoffabgabepunkt eine Gruppenantennenanordnung zuordenbar ist, die eingerichtet ist zum Verarbeiten eines Informationssignals, enthaltend mindestens einen modulierten Signalabschnitt und mindestens einen unmodulierten Signalabschnitt, wird bei dem Kraftstoffabgabesystem ein zuverlässigerer Betrieb bei gleichzeitig hohem Nutzerkomfort ermöglicht. Insbesondere ist mit einer erhöhten Zuverlässigkeit eine Zuordnung eines Kraftstoffabgabepunktes zu einem Nutzer möglich, dessen Fahrzeug mit Kraftstoff durch diesen Kraftstoffabgabepunkt versorgt werden soll.

Unter dem Verarbeiten eines Informationssignals durch mindestens eine Gruppenantennenanordnung ist anmeldungsgemäß zu verstehen, dass die mindestens eine Gruppenantennenanordnung das Informationssignal insbesondere empfangen und/oder aussenden kann.

Insbesondere ermöglicht eine Gruppenantennenanordnung die Auswertung wenigstens eines unmodulierten Signalabschnitts eines Informationssignals, derart, dass Positionsdaten eines mobilen Endgeräts, das mit der Gruppenanordnung mittels des mindestens einen Informationssignals interagiert, mit einer besonders hohen Genauigkeit bestimmt werden können.

So ist anmeldungsgemäß erkannt worden, dass unter Verwendung des (speziellen anmeldungsgemäßen) Informationssignals und der (speziellen anmeldungsgemäßen) Gruppenantennenanordnung eine Positionsbestimmung eines mobilen Endgeräts mit einer Genauigkeit im Dezimeterbereich möglich ist, insbesondere zwischen 0,3 m bis 0,5 m. Dies erlaubt wiederum ein Zuordnen eines Kraftstoffabgabepunktes zu einem Nutzer mit einer entsprechenden Genauigkeit, um beispielsweise ein Freigeben des richtigen Kraftstoffabgabepunktes zu ermöglichen, vor dem sich das Fahrzeug des Nutzers, der das mobile Endgerät mit sich führt, befindet. Auch kann durch die exaktere Zuordnung in zuverlässigerer Weise ein (automatischer) Abrechnungsprozess für einen durchgeführten Kraftabgabevorgang durchgeführt werden.

Die Zuordnung ist insbesondere dadurch möglich, dass die mindestens eine Gruppenantennenanordnung zu dem mindestens einen Kraftstoffabgabepunkt zuordenbar ist. Dies meint insbesondere, dass die geometrische Beziehung zwischen dem mindestens einen Kraftstoffabgabepunkt und der mindestens einen Gruppenantennenanordnung bekannt ist und insbesondere die (Sende- oder Empfangs-) Reichweite dieser Gruppenantennenanordnung zumindest den Abstellbereich des zugeordneten Kraftstoffabgabepunkt (nahezu vollständig) abdeckt. Aufgrund der Positionsdaten des mobilen Endgeräts (insbesondere in Bezug zu der Gruppenantennenanordnung) kann dann der zu verwendende Kraftstoffabgabepunkt bestimmt werden.

Ein anmeldungsgemäßes Kraftstoffabgabesystem dient der Abgabe von mindestens einem Kraftstoff bzw. einer Kraftstoffart an ein Fahrzeug. Das Fahrzeug ist ein Fahrzeug, das zumindest teilweise mit dem abgegebenen Kraftstoff betrieben werden kann. Bei dem mindestens einen abgebbaren Kraftstoff (bzw. Kraftstoffart) kann es sich insbesondere um einen flüssigen (z.B. Diesel, Benzin etc.) oder gasförmigen Kraftstoff (z.B. Erdgas, Wasserstoff) handeln, aber auch um elektrische Energie.

Das Kraftstoffabgabesystem kann vorzugsweise ein Tankstellensystem sein. Das Tankstellensystem kann mindestens eine Tankstelle als Kraftstoffabgabeanordnung umfassen. Unter einer Tankstelle ist anmeldungsgemäß insbesondere eine Tankstelle zu verstehen, die mindestens eine Kraftstoffart, vorzugsweise eine Vielzahl von unterschiedlichen Kraftstoffarten, für die Betankung von Fahrzeugen bereitstellt. Die Tankstelle kann mindestens einen Zapfpunkt als Kraftstoffabgabepunkt umfassen.

Vorzugsweise kann eine Tankstelle mindestens eine Tankvorrichtung als Kraftstoffabgabevorrichtung mit mindestens einem Kraftstoffabgabepunkt umfassen. Unter einer Tankvorrichtung ist insbesondere eine Zapfsäule zu verstehen, die mindestens eine Kraftstoffart für die Betankung von Fahrzeugen bereitstellt. Die Tankvorrichtung umfasst mindestens einen Zapfpunkt.

Unter einem Kraftstoffabgabepunkt ist vorliegend insbesondere eine Benutzerschnittstelle der Kraftstoffabgabeanordnung, insbesondere eine Kraftstoffabgabevorrichtung zu verstehen, mit der ein Fahrzeug von der Kraftstoffabgabeanordnung mit Kraftstoff versorgt werden kann.

Bei anderen Varianten kann das Kraftstoffabgabesystem alternativ oder zusätzlich mindestens eine Kraftstoffabgabevorrichtung in Form einer Ladestation umfassen, die mindestens einen Ladepunkt als Kraftstoffabgabepunkt umfassen kann.

Eine Kraftstoffabgabeanordnung weist vorzugsweise mindestens einen Abstellbereich auf. Ein Abstellbereich ist insbesondere eine Parkfläche für mit Kraftstoff zu versorgende Fahrzeuge. Insbesondere ist eine Kraftstoffabgabevorrichtung (z.B. eine Zapfsäule) von einem Abstellbereich zumindest teilweise umgeben. Vorzugsweise kann jedem Kraftstoffabgabepunkt ein Abstellbereich zugeordnet sein und dies im System bekannt sein. Es versteht sich, dass sich Abstellbereiche von beispielsweise benachbarten Kraftstoffabgabepunkten zumindest teilweise überlappen können.

Beispielsweise kann eine Zapfsäule bekannter Bauart so aufgebaut sein, dass sie an zwei Seiten jeweils einen Abstellbereich in Form von Abstellplätzen für zu tankende Fahrzeuge hat. Ferner kann eine derartige Zapfsäule beispielsweise an beiden Seiten als Kraftstoffabgabepunkt jeweils mindestens eine Ausgabevorrichtung (z.B. Schlauch, Zapfpistole) für Kraftstoffe aufweisen. Mit anderen Worten verfügt damit eine derartige Zapfsäule über zwei Zapfpunkte, nämlich je einen Zapfpunkt für je einen Abstellplatz bzw. Abstellbereich.

Wie bereits beschrieben wurde, ist einem ersten Kraftstoffabgabepunkt (bzw. einer Kraftstoffabgabevorrichtung, die diesen Kraftstoffabgabepunkt umfasst) eine Gruppenantennenanordnung zugeordnet. Vorzugsweise kann jedem Kraftstoffabgabepunkt einer Kraftstoffabgabeanordnung in eindeutiger Weise jeweils mindestens eine (lokale) Gruppenantennenanordnung zugeordnet sein. Bei Varianten können auch mehrere Kraftstoffabgabepunkte (beispielsweise einer Kraftstoffabgabevorrichtung oder eines zusammenhängenden Abstellbereichs) einer (gemeinsamen) Gruppenantennenanordnung zugeordnet sein.

Zusätzlich zu den vorbeschriebenen Zuordnungskriterien kann für jeden Kraftstoffabgabepunkt (z.B. jeder Säulennummer) mindestens eine Gruppenantennenanordnung vorgesehen ist und der Kraftstoffabgabepunkt durch die zugeordnete Gruppenantennenanordnung identifizierbar sein (also beispielsweise die Kennung der Gruppenantennenanordnung (eineindeutig) zu der Säulennummer korrespondieren).

Hierbei deckt die Reichweite der ersten Gruppenantennenanordnung, wie eine Sendereichweite oder eine Empfangsreichweite der Gruppenantennenanordnung, vorzugsweise zumindest den Abstellbereich des ersten Kraftstoffabgabepunkts im Wesentlichen ab, insbesondere (nahezu) den gesamten Abstellbereich, wie bereits beschrieben wurde. Mit anderen Worten kann vorgesehen sein, dass ein Fahrzeug, welches an dem Kraftstoffabgabepunkt mit Kraftstoff versorgt werden wird, in die Reichweite der ersten Gruppenantennenanordnung (stets) gelangt.

Eine anmeldungsgemäße Gruppenantennenanordnung (auch Phased Array Antenne genannt) weist insbesondere eine Mehrzahl von benachbart zueinander angeordneten Forecourt-Antennen auf. Die mindestens zwei Forecourt-Antennen einer Gruppenantennenanordnung sind elektrisch miteinander verschaltet. Die Forecourt-Antennen weisen insbesondere eine definierte Struktur und/oder eine definierte Position zueinander auf, insbesondere einen definierten Abstand zueinander. Die Struktur und die Position der Forecourt-Antennen können abhängig zumindest von der Frequenz des zu verarbeitenden Informationssignals gewählt sein. Beispielsweise können die Forecourt-Antennen parallel zueinander, jeweils mit dem gleichen Abstand, angeordnet sein. Die Forecourt-Antennen einer Gruppenantennenanordnung sind insbesondere identisch geformt.

Eine Forecourt-Antenne ist zum Senden und/oder Empfangen eines Informationssignals ausgebildet. Ein anmeldungsgemäßes Informationssignal ist insbesondere ein Datenpaketsignal mit einem modulierten Signalabschnitt und einem unmodulierten Signalabschnitt eines elektromagnetischen Signals. Der modulierte Signalabschnitt enthält in herkömmlicher Weise Dateninhalt (z.B. preamble, access-address, PDU, CRC). Zusätzlich enthält ein anmeldungsgemäßes Informationssignal einen unmodulierten Signalabschnitt (z.B. 1 bis 300 µs unmodulierte Signaldauer, vorzugsweise 16 bis 160 µs). Der unmodulierte Signalabschnitt stellt eine konstante Frequenz zur Verfügung, die anmeldungsgemäß zur Positionsbestimmung ausgewertet werden kann. Der unmodulierte Signalabschnitt zeichnet sich insbesondere dadurch aus, dass er nicht Träger von Dateninhalt ist.

Anders ausgedrückt ist der unmodulierte Signalabschnitt nicht frequenzmoduliert und nicht amplitudenmoduliert (und nicht phasenmoduliert). Der unmodulierte Signalabschnitt kann jedoch signaltechnisch demoduliert werden. Der unmodulierte Signalabschnitt wird dabei in einem sogenannten I&Q-Verfahren in zwei Wege aufgeteilt, der eine Weg der Demodulation wird mit der originalen Phasenlage (englisch: in phase) durchgeführt und ergibt die I-Daten, der zweite Weg wird mit um 90° phasenverschobener Referenzfrequenz durchgeführt und ergibt die Q-Daten (englisch: quadrature).

Vorzugsweise ist das Informationssignal ein Nahfeld-Informationssignal, z.B. basierend auf einer der Technologien, wie Bluetooth, Wibree, WiMAX, ZigBee, WLAN oder NFC. Vorzugsweise kann das Informationssignal ein Bluetooth-Informationssignal sein, besonders bevorzugt ein Bluetooth-Informationssignal der Version 5.X (oder einer höheren Version).

Das Informationssignal kann vorzugsweise ein Advertising-Signal sein. Gemäß einer bevorzugten Ausführungsform kann das Advertising-Signal ein Bluetooth Low Energy (BLE) Signal (zumindest der Version 5.X) sein. Ein BLE-Advertising-Signal kann insbesondere von nahezu jedem mobilen Endgerät, insbesondere mit einem marktüblichen Betriebssystem (z.B. Apple iOS, Google Android, Microsoft Windows Mobile, Microsoft Mobile Phone, Blackberry OS, Symbian OS, Firefox OS, Tizen, Aliyun OS), aussendbar und/oder empfangbar und auswertbar sein.

Gemäß einer bevorzugten Ausführungsform des anmeldungsgemäßen Kraftstoffabgabesystems kann die erste Gruppenantennenanordnung mindestens eine mit den Forecourt-Antennen (elektrisch) gekoppelte Forecourt-Empfangseinrichtung umfassen. Anders ausgedrückt, dient die erste Gruppenantennenanordnung in dieser Ausführungsform zum Empfangen von Informationssignalen.

Jede Forecourt-Antenne kann eine Forecourt-Empfangs-Antenne sein, und insbesondere für den Empfang von Informationssignalen abgestimmt sein. Jede der Forecourt-Antennen ist mit der Forecourt-Empfangseinrichtung elektrisch verbunden, um insbesondere die jeweils empfangenen Informationssignale der Forecourt-Empfangseinrichtung als Antennensignale zur Verfügung zu stellen. Die Forecourt-Empfangseinrichtung ist zur Weiterverarbeitung der Antennensignale eingerichtet.

Insbesondere kann die Forecourt-Empfangseinrichtung eingerichtet sein zum Bestimmen von Positionsdaten eines das Informationssignal aussendenden mobilen Endgeräts. Dies kann basierend auf dem unmodulierten Signalabschnitt eines empfangenen Informationssignals erfolgen. Positionsdaten sind vorliegend (systemweit einheitliche) Koordinaten, die insbesondere eindeutig die Position (in der Regel einen Positionsbereich aufgrund von Messtoleranzen) des Senders des Informationssignals in Bezug zum Empfänger (also vorliegend einer Gruppenantennenanordnung) definieren. Bei einer (später näher beschriebenen) Ausführungsform, bei dem ein Informationssignal von einer Gruppenantennenanordnung ausgesendet wird, sind Positionsdaten insbesondere (systemweit einheitliche) Koordinaten, die insbesondere eindeutig die Position (in der Regel einen Positionsbereich aufgrund von Messtoleranzen) des Empfängers des Informationssignals in Bezug zum Sender (also hier der Gruppenantennenanordnung) definieren.

Beispielsweise kann ein Polarkoordinatensystem verwendet werden, bei dem beispielsweise die Gruppenantennenanordnung, der geometrische Mittelpunkt der Gruppenantennenanordnung oder ein festgelegter geometrischer Punkt des zugeordneten Kraftstoffabgabepunktes (oder der entsprechende Kraftstoffabgabevorrichtung) (oder dergleichen) den Ursprung des Polarkoordinatensystems bildet. Der Abstand vom Ursprung kann mit Radius (r) bzw. Radialkoordinate bezeichnet werden und ein Winkeldatum bzw. Winkel kann mit Winkelkoordinate (ϕ) bezeichnet werden. Es versteht sich, dass andere Koordinatensysteme, wie ein kartesisches Koordinatensystem, ein Kugelkoordinatensystem etc., verwendet werden können.

Gemäß einer weiteren Ausführungsform des anmeldungsgemäßen Kraftstoffabgabesystems kann jede der Forecourt-Antennen eingerichtet sein zum Bereitstellen eines Antennensignals. Dies kann basierend auf dem unmodulierten Signalabschnitt des empfangenen Informationssignals erfolgen.

Es versteht sich, dass auch der modulierte Signalabschnitt als Antennensignal bereitgestellt werden kann, um den darin enthaltenen Dateninhalt (payload) weiterverarbeiten zu können.

Zur Bestimmung der Positionsdaten wird im Wesentlichen das Antennensignal verwendet, das den unmodulierten Signalabschnitt abbildet. Beispielsweise kann das Antennensignal ein Teil eines Gesamtantennensignals sein. Die Forecourt-Empfangseinrichtung kann mindestens ein Demodulationsmodul umfassen, eingerichtet zum Demodulieren der bereitgestellten Antennensignale.

Vorzugsweise kann, gemäß einer weiteren Ausführungsform des anmeldungsgemäßen Kraftstoffabgabesystems, das Demodulationsmodul eingerichtet sein zum Demodulieren der bereitgestellten Antennensignale, derart, dass für jedes der Antennensignale ein Amplitudendatum und ein Phasendatum des unmodulierten Signalabschnitts bestimmt werden kann. Insbesondere kann das Demodulationsmodul ein I&Q-Demodulationsmodul sein, eingerichtet zur Durchführung einer I&Q-Demodulation (In-Phase-and-Quadrature Demodulation).

Während bei einer einfachen Demodulation in der Regel nur das Amplitudendatum, also der Realteil eines komplexen Signals, bestimmt wird, wird gemäß der vorliegenden Ausführungsform vorgeschlagen, zusätzlich auch das Phasendatum zu bestimmen, also den Imaginärteil des komplexen Signals. Insbesondere können in der vorliegenden Ausführungsform unter Verwendung des Phasendatums bzw. der Phaseninformation die (augenblicklichen) Positionsdaten des Senders, der das Informationssignal ausgesendet hat, exakt bestimmt werden. Durch ein Amplitudendatum kann insbesondere eine Differenzierung unterschiedlicher Signalwellen erfolgen.

Gemäß einer besonders bevorzugten Ausführungsform des anmeldungsgemäßen Kraftstoffabgabesystems kann die Forecourt-Empfangseinrichtung mindestens ein Positionsbestimmungsmodul umfassen, eingerichtet zum Bestimmen (insbesondere Berechnen) eines ersten Winkeldatums. Dies kann basierend auf den bestimmten Amplitudendaten und den bestimmten Phasendaten der Antennensignale erfolgen.

Insbesondere können die demodulierten Daten, also das Amplitudendatum und das Phasendatum von jedem Antennensignal (insbesondere in digitaler Form), dem Positionsbestimmungsmodul bereitgestellt werden. Das Positionsbestimmungsmodul kann insbesondere eingerichtet sein, die bereitgestellten Daten (entsprechend mindestens einer vorgegebenen Berechnungsregel) weiterzuverarbeiten. Das Positionsbestimmungsmodul kann vorzugsweise eingerichtet sein zum zumindest teilweisen Bestimmen (insbesondere Berechnen) der Positionsdaten, zumindest basierend auf dem bestimmten ersten Winkeldatum.

Ein Winkeldatum ist insbesondere eine Winkelangabe zu einer (vorgebbaren) Bezugsgeraden. Die Bezugsgerade kann insbesondere bei einem Polarkoordinatensystem die (in einer im Wesentlichen horizontalen Ebene liegende) Polarachse sein, und ein Winkeldatum eines bestimmten Punktes kann der Winkel ϕ sein zwischen der Polarachse und einem Radiusvektor, der vom Ursprung des Polarkoordinatensystems auf den bestimmten Punkt zeigt.

Grundsätzlich kann der Abstand (insbesondere der Radius r) zwischen dem Sender und der Gruppenantennenanordnung (insbesondere den Forecourt-Antennen) in beliebiger Weise bestimmt werden. Basierend auf der vorbekannten geometrischen Beziehung zwischen dem ersten Kraftstoffabgabepunkt und der diesem Kraftstoffabgabepunkt zugeordneten ersten Gruppenantennenanordnung sowie dem bestimmten Abstand zwischen Sender und Gruppenantennenanordnung kann der Abstand zwischen dem mobilen Endgerät bzw. dem Fahrzeug (bzw. den bestimmten Positionsdaten) und dem ersten Kraftstoffabgabepunkt bestimmt werden.

Gemäß einer Ausführungsform des anmeldungsgemäßen Kraftstoffabgabesystems kann das Positionsbestimmungsmodul eingerichtet sein zum Bestimmen der Positionsdaten, basierend auf dem bestimmten ersten Winkeldatum und dem RSSI (Received Signal Strength Indicator) des durch die Forecourt-Antennen empfangenen Informationssignals. Der RSSI stellt insbesondere einen Indikator für die Empfangsfeldstärke des empfangenen Informationssignals dar. Durch den RSSI kann insbesondere der Abstand (insbesondere ein Abstandsbereich, bei dem Messtoleranzen berücksichtigt sind) zwischen Antennenanordnung und mobilem Endgerät (und damit zwischen dem Nutzer des Fahrzeugs, der das Endgerät mit sich trägt, und dem Kraftstoffabgabepunkt) bestimmt werden. Zusammen mit dem ersten Winkeldatum kann das Positionsbestimmungsmodul die Positionsdaten (z.B. in der Form {r, ϕ}) des mobilen Endgeräts mit hoher Genauigkeit bestimmen. Mit hoher Genauigkeit kann eine Zuordnung zwischen Kraftstoffabgabepunkt und Nutzer, beispielweise durch ein Kraftstoffabgabebestimmungsmodul, erfolgen.

Gemäß einer bevorzugten Ausführungsform des anmeldungsgemäßen Kraftstoffabgabesystems kann, alternativ oder zusätzlich zur Verwendung des RSSI, eine Triangulation erfolgen, um die Positionsdaten des mobilen Endgeräts mit besonders hoher Genauigkeit zu bestimmen. Insbesondere kann die Forecourt-Empfangseinrichtung mindestens eine Empfangseinrichtungs-Schnittstelle umfassen, eingerichtet zum Erhalten mindestens eines weiteren für das empfangene Informationssignal bestimmten Winkeldatums. Das weitere Winkeldatum kann von einer benachbart zu der ersten Gruppenantennenanordnung angeordneten weiteren Gruppenantennenanordnung bereitgestellt werden, wobei der Abstand und der Winkel zwischen den genannten Antennenanordnungen dem Positionsbestimmungsmodul bekannt sein kann. Aufgrund einer als Dateninhalt in dem Informationssignal enthaltenen Kennung des mobilen Endgeräts kann sichergestellt werden, dass beide ausgewerteten Informationssignale von dem gleichen Sender stammen.

Das Positionsbestimmungsmodul kann eingerichtet sein zum Bestimmen der Positionsdaten, basierend auf dem bestimmten ersten Winkeldatum und dem bereitgestellten weiteren Winkeldatum. Das erste Winkeldatum und das weitere Winkeldatum geben insbesondere den Winkel zum Sender (in Bezug zu der jeweiligen Polarachse, die insbesondere parallel zueinander verlaufen können) von dem jeweiligen Ursprung an, also der jeweiligen Gruppenantennenanordnung. Indem der Schnittpunkt (insbesondere ein Schnittbereich, der die Messtoleranz bei der jeweiligen Winkeldatumbestimmung berücksichtigt) bestimmt wird, werden die Positionsdaten des Senders bzw. mobilen Endgeräts bestimmt. Insbesondere kann eine Bestimmung mit einer Genauigkeit von 0,3 bis 0,5 m erfolgen.

Es versteht sich, dass bei anderen Varianten der Anmeldung, bei der ein anderes Koordinatensystem verwendet wird, ein Winkeldatum auch durch andere Koordinatendaten ausgedrückt werden kann. Insbesondere ist dem Fachmann bekannt, wie eine Umrechnung von einem Koordinatensystem in ein anderes Koordinatensystem erfolgen kann. Mit hoher Genauigkeit kann eine Zuordnung, beispielweise durch ein Kraftstoffabgabebestimmungsmodul, zwischen Kraftstoffabgabepunkt und Fahrzeug (bzw. dessen Nutzer) erfolgen.

Ferner versteht es sich, dass zwei benachbart angeordnete Gruppenantennenanordnungen dem gleichen Kraftstoffabgabepunkt zugeordnet sein können.

Wie bereits beschrieben wurde, kann die Kraftstoffabgabeanordnung mindestens einen weiteren Kraftstoffabgabepunkt umfassen. Beispielsweise können zwei oder mehr Kraftstoffabgabepunkte (jeweils insbesondere mit einem eigenen Abstellbereich) nebeneinander oder hintereinander (in definierter und im System bekannter Weise) angeordnet sein. Beispielsweise können zwei oder mehr Kraftstoffabgabevorrichtungen vorgesehen sein, beispielsweise jeweils mit einem oder zwei (oder mehr) Kraftstoffabgabepunkt/en. Dem weiteren Kraftstoffabgabepunkt (insbesondere jedem weiteren Kraftstoffabgabepunkt) kann (jeweils) eine weitere Gruppenantennenanordnung mit einer Mehrzahl von benachbart zueinander angeordneten Forecourt-Antennen (eindeutig) zuordenbar und insbesondere zugeordnet sein.

Die weitere Gruppenantennenanordnung kann mindestens eine mit den Forecourt-Antennen der weiteren Gruppenantennenanordnung gekoppelte Forecourt-Empfangseinrichtung umfassen. Eine weitere Gruppenantennenanordnung kann insbesondere entsprechend der ersten Gruppenantennenanordnung gebildet sein. Die Forecourt-Empfangseinrichtung des weiteren Kraftstoffabgabepunkts kann insbesondere mindestens eine mit der Empfangseinrichtung-Schnittstelle des ersten Kraftstoffabgabepunkts kommunikativ verbindbare Empfangseinrichtung-Schnittstelle umfassen. Insbesondere können die jeweiligen Empfangseinrichtung-Schnittstellen eingerichtet sein zum Bereitstellen und/oder Empfangen von einem Winkeldatum. Vorzugsweise können sämtliche Forecourt-Empfangseinrichtungen einer Kraftstoffabgabeanordnung miteinander kommunikativ gekoppelt sein.

Es versteht sich, dass eine Forecourt-Empfangseinrichtung eine Mehrzahl von verteilt angeordneten Modulen umfassen kann und/oder ein Modul, wie ein Demodulationsmodul und/oder ein Positionsbestimmungsmodul, aus zwei oder mehr (verteilt angeordneten) Elementen gebildet sein kann. Ferner versteht es sich, dass ein Modul, wie ein Positionsbestimmungsmodul, gemeinsam von einer Mehrzahl von Forecourt-Empfangseinrichtungen genutzt werden kann.

Vorzugsweise kann die jeweilige Gruppenantennenanordnung der Kraftstoffabgabepunkte einer Kraftstoffabgabeanordnung vorzugsweise (stets) an der (nahezu) gleichen Position montiert sein. Zudem können vorzugsweise der jeweilige Abstand und/oder der jeweilige Winkel, also die Ausrichtung zueinander, zwischen sämtlichen benachbarten Gruppenantennenanordnungen einer Kraftstoffabgabeanordnung (nahezu) gleich sein. Anders ausgedrückt ist der jeweilige Abstand und der jeweilige Winkel zwischen sämtlichen benachbarten Gruppenantennenanordnungen (nahezu) identisch. Hierdurch kann ein Array aus voneinander gekoppelten Gruppenantennenanordnungen gebildet werden.

Eine derartige Zusammenschaltung zu einem Array aus Gruppenantennenanordnungen ermöglicht eine noch präzisere Ortung eines mobilen Endgeräts. Zudem können "blinde Flecken", insbesondere in den Abstellbereichen, zumindest reduziert werden. Darüber hinaus können durch eine Auswertung der empfangenen Informationssignale Anomalien erkannt werden und Manipulationsversuche detektiert werden.

Insbesondere als Alternative zu der Ausführungsform mit der Forecourt-Empfangseinrichtung kann gemäß einer weiteren bevorzugten Ausführungsform des anmeldungsgemäßen Kraftstoffabgabesystems vorgesehen sein, dass die erste Gruppenantennenanordnung mindestens eine mit den Forecourt-Antennen gekoppelte Forecourt-Sendeeinrichtung umfasst. Die Forecourt-Sendeeinrichtung kann eingerichtet sein zum Steuern eines Aussendens eines ersten Gruppeninformationssignals durch die Forecourt-Antennen. Das erste Gruppeninformationssignal kann eine Mehrzahl von Einzelinformationssignalen enthalten, die jeweils von den Forecourt-Antennen ausgesendet werden. Ein Einzelinformationssignal ist insbesondere ähnlich wie ein zuvor beschriebenes Informationssignal gebildet und weist einen modulierten und einen unmodulierten Signalabschnitt auf. Mehrere Einzelinformationssignale einer Gruppenantennenanordnung bilden eine Gruppe in Form eines Gruppenantennensignals der entsprechenden Gruppenantennenanordnung.

Insbesondere ist anmeldungsgemäß erkannt worden, dass Positionsdaten eines mobilen Endgeräts auch dadurch bestimmt werden können, wenn das Kraftstoffabgabesystem eine Gruppenantennenanordnung umfasst, welche ein Gruppeninformationssignal aussendet, gesteuert durch eine Forecourt-Sendeeinrichtung. Während bei der Ausführungsform, bei der die Gruppenantennenanordnung eine Forecourt-Empfangseinrichtung umfasst, eine sogenannte Auswertung des "Einfallswinkels" ("Angle of Arrival" (AoA)) erfolgt, erfolgt bei der Gruppenantennenanordnung, die eine Forecourt-Sendeeinrichtung umfasst, eine sogenannte Auswertung des "Austrittswinkels" ("Angle of Departure" (AoD)). Beide Auswertungen erlauben die Bestimmung der Positionsdaten des mobilen Endgeräts in Bezug zu der jeweiligen mindestens einen Gruppenantennenanordnung (und damit in Bezug zu dem mindestens einen zugeordneten Kraftstoffabgabepunkt) mit einer hohen Genauigkeit.

Gemäß einer bevorzugten Ausführungsform des anmeldungsgemäßen Kraftstoffabgabesystems kann die Forecourt-Sendeeinrichtung eingerichtet sein zum Steuern des Aussendens des ersten Gruppeninformationssignals, derart, dass die jeweiligen unmodulierten Signalabschnitte der Einzelinformationssignale des ersten Gruppeninformationssignals jeweils eine bestimmte Phasenbeziehung zueinander haben. Basierend auf den jeweiligen Phasenbeziehungen der mindestens zwei Einzelinformationssignale des ersten Gruppeninformationssignals kann eine Bestimmung der Positionsdaten eines mobilen Endgeräts erfolgen, welches das Gruppeninformationssignal empfängt.

Darüber hinaus kann gemäß einer weiteren Ausführungsform des anmeldungsgemäßen Kraftstoffabgabesystems das Kraftstoffabgabesystem mindestens eine in einem mobilen Endgerät (dessen Positionsdaten bestimmt werden sollen) angeordnete Endgeräte-Empfangseinrichtung umfassen, die mit einer Antenne des mobilen Endgeräts gekoppelt ist. Insbesondere kann als Endgeräte-Empfangseinrichtung eine auf dem mobilen Endgerät installierbare (Software-) Kraftstoffabgabeanwendung vorgesehen sein.

Die Endgeräte-Empfangseinrichtung kann mindestens ein Demodulationsmodul umfassen, eingerichtet zum Demodulieren von ersten Antennensignalen, die aus dem durch die Antenne des mobilen Endgeräts empfangenen ersten Gruppeninformationssignal resultieren. Insbesondere kann das Demodulationsmodul ein I&Q-Demodulationsmodul sein (wie zuvor beschrieben wurde). Insbesondere kann das Demodulationsmodul für jedes bereitgestellte (digitale) Antennensignal jeweils ein Amplitudendatum und ein Phasendatum bestimmen.

Gemäß einer bevorzugten Ausführungsform des anmeldungsgemäßen Kraftstoffabgabesystems kann die Endgeräte-Empfangseinrichtung mindestens ein Positionsbestimmungsmodul umfassen, eingerichtet zum Bestimmen von Positionsdaten des mobilen Endgeräts (relativ zu der aussendenden Gruppenantennenanordnung). Dies kann basierend auf den demodulierten ersten Antennensignalen erfolgen, insbesondere des für jedes erste Antennensignal bestimmten Phasendatums und des für jedes erste Antennensignal bestimmten Amplitudendatums. Das Positionsbestimmungsmodul kann ein erstes Winkeldatum bestimmen, basierend auf den demodulierten Antennensignalen. Insbesondere kann das Positionsbestimmungsmodul ein erstes Winkeldatum bestimmen, basierend auf den Amplitudendaten und Phasendaten (insbesondere in analoger Weise zu der Funktionsweise des Positionsbestimmungsmoduls der Forecourt-Empfangseinrichtung, so dass zur Vermeidung von Wiederholungen hierauf verwiesen wird). Bei einem Polarkoordinatensystem kann der Ursprung insbesondere die Antenne des mobilen Endgeräts (oder ein anderer Punkt des mobilen Endgeräts) sein.

Vorzugsweise kann, gemäß einer weiteren Ausführungsform des anmeldungsgemäßen Kraftstoffabgabesystems, das Positionsbestimmungsmodul eingerichtet sein zum Bestimmen (insbesondere Berechnen) der Positionsdaten des mobilen Endgeräts, basierend auf den demodulierten ersten Antennensignalen und dem RSSI des durch die Antenne des mobilen Endgeräts empfangenen ersten Informationssignals. Insbesondere kann das Positionsbestimmungsmodul als Positionsdaten einen Winkel und ein Radius bestimmen, basierend auf dem RSSI und einem ersten Winkeldatum (wie insbesondere zuvor beschrieben wurde).

Alternativ oder zusätzlich kann das Positionsbestimmungsmodul eingerichtet sein zum Bestimmen der Positionsdaten des mobilen Endgeräts, basierend auf den demodulierten ersten Antennensignalen und auf demodulierten zweiten Antennensignalen eines weiteren ausgesendeten Gruppeninformationssignals, das durch eine benachbart zu der ersten Gruppenantennenanordnung angeordnete weitere Gruppenantennenanordnung ausgesendet wurde. In analoger Weise zu den obigen Ausführungen kann insbesondere aus zwei Winkeldaten ein Schnittpunkt bestimmt werden, insbesondere ein Schnittpunktbereich. Der Schnittpunktbereich stellt die (augenblickliche) Position des mobilen Endgeräts in Bezug zu den mindestens zwei Gruppenantennenanordnungen dar.

Die bestimmten Positionsdaten können insbesondere über eine Kommunikationsverbindung durch das mobile Endgerät an den mindestens einen Kraftstoffabgabepunkt und/oder einer anderen Einrichtung des Kraftstoffabgabesystems (mittelbar oder unmittelbar) übertragen werden, beispielsweise an ein Kraftstoffabgabepunktbestimmungsmodul.

Gemäß einer weiteren Ausführungsform des anmeldungsgemäßen Kraftstoffabgabesystems kann die erste Gruppenantennenanordnung oberhalb des ersten Kraftstoffabgabepunkts angeordnet sein, insbesondere an einem Dach und/oder einer Mastvorrichtung der Kraftstoffabgabeanordnung. Beispielswiese kann das Dach ein ohnehin vorgesehenes Dach der Kraftstoffabgabeanordnung sein, wie ein Tankstellendach.

Die durch eine Gruppenantennenanordnung abgedeckte Reichweite kann durch eine Anordnung oberhalb des Kraftstoffabgabepunkts optimiert werden. Insbesondere kann hierdurch in einfacher Weise erreicht werden, dass zumindest der Abstellbereich (vor) dem jeweiligen Kraftstoffabgabepunkt, dem die Gruppenantennenanordnung zugeordnet sein kann, in ausreichender Weise durch die Reichweite dieser Gruppenantennenanordnung abgedeckt werden kann. Vorzugsweise kann auch eine benachbart angeordnete Gruppenantennenanordnung (beispielsweise eines weiteren Kraftstoffabgabepunkts) den jeweils benachbarten Abstellbereich abdecken, um insbesondere die zuvor beschriebene Positionsbestimmung mittels Triangulation zu ermöglichen.

Bei anderen Varianten der Anmeldung kann eine Gruppenantennenanordnung alternativ oder zusätzlich in der Kraftstoffabgabevorrichtung (z.B. Zapfsäule, Ladestation) des zugeordneten Kraftstoffabgabepunkts integriert sein. Die Gruppenantennenanordnung kann insbesondere derart angeordnet sein, dass sie in Richtung des mindestens einen Abstellbereichs ausgerichtet ist.

Bei wiederum anderen Varianten der Anmeldung kann eine Gruppenantennenanordnung alternativ oder zusätzlich neben den Kraftstoffabgabevorrichtungen (z.B. Zapfsäule, Ladestation) und neben dem Abstellbereich des zugeordneten Kraftstoffabgabepunkts installiert sein, also beispielweise auf der sogenannten Zapfsäuleninsel. Dabei kann die Gruppenantennenanordnung an eigens dafür aufgestellten Mitteln befestigt sein oder an bauseits vorhandenen Mitteln befestigt werden, wie z.B. an Tragsäulen des Tankstellendachs. Die Gruppenantennenanordnung kann insbesondere derart angeordnet sein, dass sie in Richtung des mindestens einen Abstellbereichs ausgerichtet ist.

Bei mehreren Abstellbereichen eines Kraftstoffabgabepunkts kann eine entsprechende Mehrzahl von Gruppenantennenanordnungen vorgesehen sein, um sämtliche Abstellbereiche des Kraftstoffabgabepunkts abzudecken.

Vorzugsweise kann jede Gruppenantennenanordnung einer Kraftstoffabgabeanordnung in der gleichen Höhe (z.B. zwischen 1,90 m und 5 m) über der Oberfläche des mindestens einen Abstellbereichs angeordnet sein. Vorzugsweise können bei jeder Kraftstoffabgabeanordnung die jeweiligen Gruppenantennenanordnungen stets in der gleichen Höhe (z.B. zwischen 1,90 m und 5 m) über der Oberfläche der Abstellbereiche angeordnet sein. Durch eine Anordnung in dem oben genannten Höhenbereich kann eine besonders gute Ausrichtung der Forecourt-Antennen zu den mobilen Endgeräten, die sich zumindest zunächst in Fahrzeugen befinden (zum Tanken kann ein Nutzer aus dem Fahrzeug mit seinem Endgerät aussteigen), erfolgen und somit gute Auswerteergebnisse erzielt werden.

Gemäß einer weiteren Ausführungsform des anmeldungsgemäßen Kraftstoffabgabesystems kann eine Gehäusewand (z.B. eine Vorderseite) eines Antennengehäuses, in dem die Gruppenantennenanordnung integriert ist, zumindest im Bereich der Mehrzahl der Forecourt-Antennen aus einem Material (z. B. verzinnte Kupferfolie, Kunststoff, Glas, Gipskarton) gebildet sein, das elektromagnetische Signale dämpft und/oder filtert.

Insbesondere kann das Material derart gebildet sein, dass (nahezu) nur Informationssignale mit einer bestimmten Frequenz (beispielsweise entsprechend dem verwendeten Trägersystems (z.B. Bluetooth, WLAN etc.)) durchgelassen werden, während Signale mit einer anderen Frequenz blockiert werden.

Gemäß einer bevorzugten Ausführungsform des anmeldungsgemäßen Kraftstoffabgabesystems kann das Kraftstoffabgabesystem mindestens ein Kraftstoffabgabepunktbestimmungsmodul umfassen, eingerichtet zum Bestimmen des von dem Nutzer des mobilen Endgeräts verwendeten Kraftstoffabgabepunkts, zumindest basierend auf den bestimmten Positionsdaten des mobilen Endgeräts des Nutzers (und der Zuordnung zwischen Kraftstoffabgabepunkt und Gruppenantennenanordnung). Das Kraftstoffabgabepunktbestimmungsmodul kann in einer lokalen Rechenvorrichtung der Kraftstoffabgabeanordnung und/oder in einem Backendsystem implementiert sein. Insbesondere kann dem Kraftstoffabgabepunktbestimmungsmodul die bestimmten Positionsdaten zur Verfügung gestellt werden, beispielsweise über ein drahtloses und/oder drahtgebundenes Kommunikationsnetz. Insbesondere können dem Kraftstoffabgabepunktbestimmungsmodul die jeweiligen Positionsdaten der vorzugsweisen Mehrzahl von Kraftstoffabgabepunkten einer Kraftstoffabgabeanordnung (in Bezug zu der mindestens einen zuordenbaren Gruppenantennenanordnung) bekannt sein, beispielsweise in einem Speichermodul gespeichert sein.

Basierend auf den bestimmten Positionsdaten des mobilen Endgeräts und den Positionsdaten der Mehrzahl von Kraftstoffabgabepunkten kann das Kraftstoffabgabepunktbestimmungsmodul den von dem Nutzer des mobilen Endgeräts verwendeten Kraftstoffabgabepunkt bestimmt werden.

Gemäß einer weiteren Ausführungsform des anmeldungsgemäßen Kraftstoffabgabesystems kann das Kraftstoffabgabepunktbestimmungsmodul eingerichtet sein zum Bestimmen des von dem Nutzer des mobilen Endgeräts verwendeten Kraftstoffabgabepunkts, zusätzlich basierend auf mindestens einem der Daten aus der Gruppe, umfassend:
- ein Kameradatum,
- ein Nahfeldsensordatum,
- ein Fernfeldsensordatum,
- ein Kraftstoffabgabepunkt-Ereignis.

Vorzugsweise kann ein Bestimmen des von dem Nutzer des mobilen Endgeräts verwendeten Kraftstoffabgabepunkts noch weiter verbessert werden, indem weitere verfügbare Daten, wie Kameradaten einer oder mehrerer (in dem mindestens einen Abstellbereich installierter) Kamera(s), weitere Sensorikdaten, wie Daten von weiteren Nahfeldkommunikationseinrichtungen etc., herangezogen werden. Beispielsweise kann hierdurch die Positionsbestimmung noch weiter verbessert werden, beispielsweise Positionsdaten durch weitere verfügbare Daten verifiziert werden. Vorzugsweise kann der mindestens eine entsprechende Sensor mit dem Kraftstoffabgabepunktbestimmungsmodul kommunikativ verbindbar sein.

Darüber hinaus können vorzugsweise bei der Bestimmung des zu verwendeten Kraftstoffabgabepunkts die vom Kraftstoffabgabepunkt (z.B. Zapfpunkt) detektierten Ereignisse berücksichtigt werden. Solche Ereignisse sind beispielsweise bei einer konventionelle Zapfsäule für Mineralölprodukte das Entnehmen eines Zapfventils ("Zapfpistole") aus der Ruhelage, das Beginnen der Tankung durch Messen einer ersten ausgegebenen Kraftstoffmenge, des Beenden der Tankung durch Einhängen des Zapfventils in die Ruhelage. Bei anderen Kraftstoffabgabepunkten sind die Ereignisse analog, z.B. bei einer Stromladesäule das Entnehmen eines Ladesteckers, das Fließen von Ladestrom, das Einhängen des Ladesteckers.

Insbesondere kann die Zuordnung eines mobilen Endgeräts zu einem verwendeten Kraftstoffabgabepunkt erfolgen aufgrund der räumlichen Nähe des mobilen Endgeräts bei bestimmten Ereignissen. Insbesondere kann ein mobiles Endgerät einem Tankvorgang an einem bestimmten Kraftstoffabgabepunkt zugeordnet werden, wenn es beim Entnehmen des Zapfventils und beim Einhängen des Zapfventils als diesem Kraftstoffabgabepunkt nächstes mobiles Endgerät bestimmt wurde.

Insbesondere kann eine Kraftstoffabgabeanwendung des mobilen Endgeräts den Nutzer zu einer Bestätigung des Kraftstoffabgabepunkts auffordern, wenn das mobile Endgerät nur beim Entnehmen oder nur beim Einhängen des Zapfventils als diesem Kraftstoffabgabepunkt nächstes mobiles Endgerät bestimmt wurde, nicht aber bei beiden Ereignissen. Wenn also die Ereignisse am Kraftstoffabgabepunkt und die gleichzeitig bestimmte Position eines mobilen Endgeräts eines potenziellen Nutzers nicht konsistent sind, kann eine Nutzeraktion eingeleitet werden. Alternativ oder zusätzlich kann das Tankstellensystem auch das Bedienpersonal der Tankstelle zur Bestätigung des verwendeten Kraftstoffabgabepunkts auffordern.

Darüber hinaus kann gemäß einer bevorzugten Ausführungsform der Anmeldung ein (automatischer) Abrechnungsvorgang durchgeführt werden. Vorzugsweise kann das System ein Abrechnungsmodul umfassen, das in der (lokalen) Rechenvorrichtung der Kraftstoffabgabeanordnung und/oder einem Backendsystem implementiert sein kann. Ein Abrechnungsprozess kann ein Empfangen, durch das Abrechnungsmodul, von Daten zur abgegebenen Kraftstoffmenge von dem verwendeten Kraftstoffabgabepunkt umfassen. Das Abrechnungsmodul kann, basierend auf der abgegebenen Kraftstoffmenge, einer Preisangabe, der Nutzerkennung des Nutzers und beispielsweise in dem Nutzerkonto eines registrierten Nutzers gespeicherten Abrechnungsdaten (z.B. Kreditkartennummer, Kontodaten etc.), eine (automatische) Abrechnung durchführen. Beispielsweise kann eine entsprechende Abrechnungsnachricht an das mobile Endgerät gesendet werden, und ein fiskalisch gültiger Kassenbeleg kann an eine zu dem Nutzer hinterlegte E-Mail-Adresse (oder dergleichen) gesendet werden.

Alternativ kann ein Durchführen eines Abrechnungsvorgangs durch eine lokale Abrechnungseinrichtung der Kraftstoffabgabeanordnung, basierend auf der empfangenen Kraftstoffmenge, der Nutzerkennung und der Zapfpunktkennung des verwendeten Zapfpunktes, vorgesehen sein. Hierzu können der lokalen Abrechnungseinrichtung bzw. dem Zahlpunkt (z.B. Kasse innerhalb eines Tankstellengebäudes) die entsprechenden Daten bereitgestellt werden.

Bei einer Ausführungsform kann eine periodische und insbesondere nahezu kontinuierliche Bestimmung der Positionsdaten eines mobilen Endgeräts in Relation zu dem mindestens einen Kraftstoffabgabepunkt erfolgen. Hierdurch kann insbesondere ein (augenblickliches) Bewegungsprofil des mobilen Endgeräts und damit des Fahrzeugs, das sich dem Kraftstoffabgabepunkt nähert, bestimmt werden. Hierdurch ist es insbesondere möglich, den Kraftstoffabgabepunkt zu identifizieren, auf die ein Nutzer des mobilen Endgeräts mit seinem Fahrzeug zusteuert, und diesen dann freizugeben, wenn das Fahrzeug den Kraftstoffabgabepunkt tatsächlich erreicht.

Wie bereits beschrieben wurde, kann das mobile Endgerät eine Kraftstoffabgabeanwendung umfassen. Zumindest das vorbeschriebene Empfangen oder Aussenden von Informationssignalen kann durch die Kraftstoffabgabeanwendung gesteuert werden. Hierzu kann es erforderlich sein, dass die genannte Anwendung zunächst aktiviert werden muss. Bei einer Ausführungsform kann die Aktivierung manuell durch den Nutzer bewirkt werden.

Gemäß einer bevorzugten Ausführungsform des anmeldungsgemäßen Kraftstoffabgabesystems kann der Kraftstoffabgabeanordnung mindestens eine Sendeeinrichtung zugeordnet sein. Beispielsweise kann ferner ein Empfangen, durch das mobile Endgerät, mindestens einer der Aufwecknachrichten vorgesehen sein, derart, dass mindestens eine Aktivierung einer auf dem mobilen Endgerät installierten Kraftstoffabgabeanwendung bewirkt wird. Beispielsweise kann eine Ausführungsform ein Senden mindestens einer Aufweck-Nachricht von der Sendeeinrichtung an das mobile Endgerät umfassen, derart, dass mindestens eine Aktivierung einer auf dem mobilen Endgerät installierten Kraftstoffabgabeanwendung bewirkt wird. Insbesondere kann die Aufwecknachricht durch das mobile Endgerät empfangen werden und durch das Empfangen eine Aktivierung der auf dem mobilen Endgerät installierten Kraftstoffabgabeanwendung ausgelöst werden.

Eine eindeutige Zuordnung der Sendeeinrichtung zu einer Kraftstoffabgabeanordnung kann insbesondere durch eine (drahtlose und/oder vorzugsweise drahtgebundene) Kommunikationsverbindung zwischen einer datentechnischen Einrichtung der Kraftstoffabgabeanordnung und der mindestens einen Sendeeinrichtung bewirkt werden. Zudem ist vorliegend unter einer Zuordnung insbesondere zu verstehen, dass das Sendefeld der einen oder mehreren Sendeeinrichtung/en einer Kraftstoffabgabeanordnung zumindest den Abstellbereich und/oder den gesamten Zufahrtsbereich zu den Abstellbereichen der Kraftstoffabgabeanordnung abdeckt. Mit anderen Worten kann ein Nutzer mit seinem Fahrzeug nur zu einem Kraftstoffabgabepunkt der Kraftstoffabgabeanordnung gelangen durch ein Passieren des Sendefelds der Sendeeinrichtung.

Insbesondere kann ein vorzugsweise (quasi) kontinuierliches Aussenden eines Sendefelds durch die Sendeeinrichtung vorgesehen sein. Das Sendefeld kann zumindest eine Aufwecknachricht umfassen.

Gelangt ein mobiles Endgerät in den (vorgebbaren) Sendebereich bzw. in das Sendefeld der mindestens einen Sendeeinrichtung, bewirkt der Empfang der Aufwecknachricht durch das mobile Endgerät die Aktivierung der genannten Anwendung. Insbesondere kann die Aufwecknachricht (oder eine weitere Nachricht) Instruktionen (bzw. Code) umfassen, die nach einem Empfang der Nachricht ein Aktivieren der genannten Anwendung bewirken. In vorzugsweise automatischer Weise, also ohne Nutzeraktionen, kann das Aktivieren der genannten Anwendung erfolgen und die beschriebene Positionsbestimmung bewirkt werden. Es versteht sich, dass ggf. eine Bestätigung durch einen Nutzer erforderlich sein kann.

Eine anmeldungsgemäße Sendeeinrichtung kann RFID-Technologie, Infrarot-Technologie, WLAN-Technologie, in Farbe und/oder Zeitintervallen moduliertes Licht und/oder eine Schall-Technologie verwenden. Vorzugsweise kann die Sendeeinrichtung ein Bluetooth-Beacon sein, der ein Bluetooth-Signal aussendet. Besonders bevorzugt kann als Sendeeinrichtung ein BLE (Bluetooth Low Energy) Beacon eingesetzt werden.

Gemäß einer bevorzugten Ausführungsform des anmeldungsgemäßen Kraftstoffabgabesystems kann das Kraftstoffabgabesystem, wie bereits beschrieben wurde, mindestens ein Backendsystem umfassen. Ein Backendsystem kann von einem oder mehreren (verteilt angeordneten) Server/n gebildet sein. Ein Backendsystem ist insbesondere entfernt von der mindestens einen Kraftstoffabgabeanordnung angeordnet. Neben einem Kraftstoffabgabepunktbestimmungsmodul, einem Steuermodul und/oder einem Abrechnungsmodul kann ein Backendsystem mindestens ein Kommunikationsmodul umfassen, um z.B. mit dem mobilen Endgerät und/oder einer lokalen Rechenvorrichtung der Kraftstoffabgabeanordnung (bidirektional) zu kommunizieren.

Insbesondere für die Ausführungsform, bei der die Gruppenantennenanordnung eine Forecourt-Sendeeinrichtung umfasst und die Positionsbestimmung durch eine Endgeräte-Empfangseinrichtung erfolgt, kann vorgesehen sein, dass das entsprechende mobile Endgerät (insbesondere die Kraftstoffabgabeanwendung) eingerichtet ist zum Übertragen eines Datensatzes, enthaltend mindestens ein Authentifizierungsdatum und/oder bestimmte Positionsdaten. Als Authentifizierungsdatum kann beispielsweise eine dem Nutzer (systemweit eineindeutig) zugeordnete Nutzerkennung übertragen werden.

Beispielsweise kann von jedem registrierten Nutzer in dem Backendsystem ein Nutzerkonto mit Nutzerdaten (z.B. Nutzerkennung, Abrechnungsdaten, Berechtigungsdaten, Fahrzeugdaten (z.B. Kennzeichen, Kraftstoffart etc.)) gespeichert sein. Mit Hilfe dieser Daten kann zudem vorzugsweise eine automatische Abrechnung eines Kraftstoffabgabevorgangs erfolgen, wie zuvor beschrieben wurde.

Der Datensatz kann zusätzlich eine Kraftstoffabgabepunktkennung (z.B. Säulennummer) enthalten. Jedem Kraftstoffabgabepunkt eines Kraftstoffabgabesystems kann (systemweit eineindeutig) eine Kraftstoffabgabepunktkennung zugeordnet sein. Beispielsweise kann die Kraftstoffabgabepunktkennung in einem (vorzugsweise jedem) Einzelinformationssignal in dem modulierten Signalabschnitt enthalten sein, das von der Gruppenantennenanordnung ausgesendet wird, die dem entsprechenden Kraftstoffabgabepunkt zugeordnet ist. Hierdurch ist insbesondere eine eindeutige Zuordnung der Gruppenantennenanordnung zu diesem Kraftstoffabgabepunkt gegeben. Ein Datensatz kann weitere Daten enthalten, wie beispielsweise einen Zeitstempel.

Wie bereits beschrieben wurde, kann vorzugsweise eine periodische und insbesondere nahezu kontinuierliche Bestimmung der Positionsdaten des mobilen Endgeräts erfolgen. Die Kraftstoffabgabeanwendung des mobilen Endgeräts kann bewirken, dass die nahezu kontinuierlich bestimmten Positionsdaten (z.B. zusammen mit dem genannten Authentifizierungsdatum) periodisch, nahezu kontinuierlich in Form einer Vielzahl von Datensätzen an das Backendsystem übertragen werden.

Ein weiterer Aspekt der Anmeldung ist ein Verfahren zum Betreiben eines Kraftstoffabgabesystems mit mindestens einem Kraftstoffabgabepunkt, wobei dem Kraftstoffabgabepunkt mindestens eine Gruppenantennenanordnung zugeordnet ist, die eine Mehrzahl von benachbart zueinander angeordneten Forecourt-Antennen und eine mit den Forecourt-Antennen gekoppelte Empfangseinrichtung umfasst, das Verfahren umfassend:
- Empfangen, durch die Forecourt-Antennen, eines Informationssignals, das mindestens einen modulierten Signalabschnitt und mindestens einen unmodulierten Signalabschnitt enthält,
- Bereitstellen, durch die Forecourt-Antennen, von Antennensignalen, die jeweils auf dem unmodulierten Signalabschnitt des empfangenen Informationssignals basieren, und
- Bestimmen von Positionsdaten eines das Informationssignal aussendenden mobilen Endgeräts, zumindest basierend auf den bereitgestellten Antennensignalen.

Das Verfahren kann insbesondere zum Betreiben des vorbeschriebenen Kraftstoffabgabesystems verwendet werden, also zum Betreiben mindestens eines zuvor beschriebenen Kraftstoffabgabepunkts, dem eine Gruppenantennenanordnung zugeordnet ist.

Ein weiterer Aspekt der Anmeldung ist eine Kraftstoffabgabeanwendung, insbesondere in Form einer durch einen Prozessor eines mobilen Endgeräts ausführbaren Softwareanwendung, zur Installation auf einem mobilen Endgerät, umfassend:
- mindestens ein Empfangsmodul, eingerichtet zum Empfangen von Antennensignalen, die zumindest auf den jeweiligen unmodulierten Signalabschnitten von Einzelinformationssignalen eines durch eine Antenne des mobilen Endgeräts empfangenen Gruppeninformationssignals basieren,
- wobei das Gruppeninformationssignal von einer einem Kraftstoffabgabepunkt eines Kraftstoffabgabesystems zugeordneten Gruppenantennenanordnung mit einer Mehrzahl von benachbart zueinander angeordneten Forecourt-Antennen ausgesendet wurde, und
- mindestens ein Positionsbestimmungsmodul, eingerichtet zum Bestimmen von Positionsdaten des das Gruppeninformationssignal empfangenen mobilen Endgeräts, zumindest basierend auf dem unmodulierten Signalabschnitt der Einzelinformationssignale des Gruppeninformationssignals.

Die Kraftstoffabgabeanwendung ist insbesondere eine auf einem mobilen Endgerät installierbare Softwareanwendung.

Bei einem Kraftstoffabgabesystem kann es zunächst erforderlich oder zumindest möglich sein, dass der Nutzer sich bei diesem System vor der erstmaligen Nutzung einer Kraftstoffabgabeanordnung (beispielsweise um ein Fahrzeug an der Kraftstoffabgabeanordnung zu tanken) registriert. Bei einer erfolgreichen Registrierung wird in dem Kraftstoffabgabesystem, insbesondere dem Backendsystem des Kraftstoffabgabesystem (auch Hintergrundsystem genannt), ein Nutzerkonto für den registrierten Nutzer angelegt, indem Identifikationsdaten in dem Backendsystem gespeichert werden, wie eine eindeutige (Nutzer-)Kennung (ID) des Nutzers, Fahrzeugkennzeichen des Nutzers, Authentisierungsdaten, z.B. ein Passwort, und Abrechnungsdaten, z.B. Kreditkartendaten oder Kontoverbindungen, Adressdaten oder sonstige Daten für die Abrechnung. In Gesamtheit werden diese Daten Nutzerstammdaten genannt. Zudem kann auf dem mobilen Endgerät des registrierten Nutzers die Kraftstoffabgabeanwendung in Form einer so genannten App installiert sein.

Die Kraftstoffabgabeanwendung in Form eines Computerprogramms, insbesondere die Instruktionen bzw. Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein mobiles Endgerät einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor des mobilen Endgeräts kann beispielsweise Zwischenergebnisse oder Ähnliches in dem Hauptspeicher speichern.

Ein weiterer Aspekt der Anmeldung ist ein Verfahren zum Betreiben einer Kraftstoffabgabeanwendung, insbesondere einer zuvor beschriebenen Kraftstoffabgabeanwendung, umfassend:
- Empfangen von Antennensignalen, die zumindest auf den jeweiligen unmodulierten Signalabschnitten von Einzelinformationssignalen eines durch eine Antenne des mobilen Endgeräts empfangenen Gruppeninformationssignals basieren,
- wobei das Gruppeninformationssignal von einer einem Kraftstoffabgabepunkt eines Kraftstoffabgabesystems zugeordneten Gruppenantennenanordnung mit einer Mehrzahl von benachbart zueinander angeordneten Forecourt-Antennen ausgesendet wurde, und
- Bestimmen von Positionsdaten des das Gruppeninformationssignal empfangenden mobilen Endgeräts, zumindest basierend auf dem unmodulierten Signalabschnitt der Einzelinformationssignale des Gruppeninformationssignals.

Ein noch weiterer Aspekt ist ein mobiles Endgerät, umfassend mindestens eine auf dem mobilen Endgerät installierte und zuvor beschriebene Kraftstoffabgabeanwendung.

Beispielhafte und nicht abschließende mobile Endgeräte sind Smartphones, Tablet-Computer, mobile Spielkonsolen, Laptops, Netbooks, Datenbrillen, Smart-Watches und ähnliche Wearables. Alternativ kann ein mobiles Endgerät ein dediziertes Kraftstoffabgabe-Gerät sein, das ausschließlich für eine Kraftstoffabgabeanwendung ausgelegt ist.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen. Es sei ferner angemerkt, dass Begriffe, wie "erste"; "zweite" etc. nicht eine Reihenfolge angeben, sondern insbesondere zur Unterscheidung zweier Elemente (z.B. Kraftstoffabgabepunkt, Kraftstoffabgabevorrichtung etc.) dienen.

Die Merkmale der Kraftstoffabgabesysteme, Verfahren, Kraftstoffabgabeanwendungen und mobilen Endgeräte sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Kraftstoffabgabesystem, die anmeldungsgemäßen Verfahren, die anmeldungsgemäße Kraftstoffabgabeanwendung und das anmeldungsgemäße mobile Endgerät auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Kraftstoffabgabesystems gemäß der vorliegenden Anmeldung,
- Fig. 2: eine schematische Ansicht eines weiteren Ausführungsbeispiels eines Kraftstoffabgabesystems gemäß der vorliegenden Anmeldung,
- Fig. 3a: ein schematisches Diagramm zur Erläuterung eines Ausführungsbeispiels zur Bestimmung von Positionsdaten eines mobilen Endgeräts,
- Fig. 3b: ein schematisches Diagramm zur Erläuterung eines weiteren Ausführungsbeispiels zur Bestimmung von Positionsdaten eines mobilen Endgeräts,
- Fig. 4: eine schematische Darstellung eines Ausführungsbeispiels eines Informationssignals gemäß der vorliegenden Anmeldung,
- Fig. 5: eine schematische Ansicht eines weiteren Ausführungsbeispiels eines Kraftstoffabgabesystems gemäß der vorliegenden Anmeldung,
- Fig. 6: eine schematische Ansicht eines weiteren Ausführungsbeispiels eines Kraftstoffabgabesystems gemäß der vorliegenden Anmeldung,
- Fig. 7: eine schematische Ansicht eines weiteren Ausführungsbeispiels eines Kraftstoffabgabesystems gemäß der vorliegenden Anmeldung,
- Fig. 8: ein Diagramm eines Ausführungsbeispiels eines Verfahrens gemäß der vorliegenden Anmeldung, und
- Fig. 9: ein Diagramm eines Ausführungsbeispiels eines Verfahrens gemäß der vorliegenden Anmeldung.

Nachfolgend werden für gleiche Elemente gleiche Bezugszeichen verwendet.

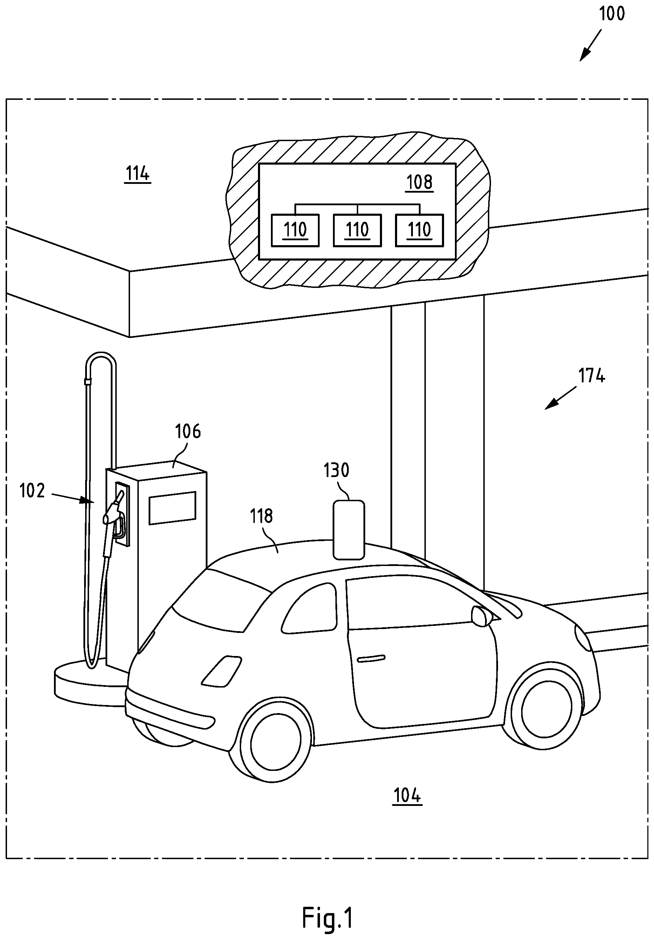

Die Figur 1 zeigt eine schematische Ansicht eines Ausführungsbeispiels eines Kraftstoffabgabesystems 100 gemäß der vorliegenden Anmeldung. Das dargestellte Kraftstoffabgabesystem 100 umfasst eine Kraftstoffabgabeanordnung 174. Beispielhaft ist die Kraftstoffabgabeanordnung 174 eine Tankstelle 174 mit mindestens einer Kraftstoffabgabevorrichtung 106 in Form einer Tank- bzw. Zapfsäule 106 mit einem Kraftstoffabgabepunkt 102 in Form eines Zapfpunkts.

Wie beschrieben, ist die Kraftstoffabgabevorrichtung 106 insbesondere eine Tanksäule bzw. Zapfsäule 106. Der Kraftstoffabgabepunkt 102 ist insbesondere ein Zapfpunkt 102 in Form eines Schlauchs mit Zapfpistole zum Ausgeben von gasförmigen oder flüssigen Kraftstoffen (z.B. Diesel, Benzin, Wasserstoff etc.) gebildet. Bei anderen Varianten kann alternativ oder zusätzlich eine elektrische Ladestation vorgesehen sein.

Es versteht sich, dass gemäß anderen Varianten der Anmeldung mehrere Kraftstoffabgabevorrichtungen und/oder mehrere Kraftstoffabgabepunkte vorgesehen sein können. Ferner versteht es sich, dass ein Kraftstoffabgabesystem 100 eine Mehrzahl von Tankstellen oder dergleichen umfassen kann.

Vor der mindestens einen Kraftstoffabgabevorrichtung 106 ist vorliegend ein Abstellbereich 104 angeordnet. Der Abstellbereich 104 stellt insbesondere den Parkbereich für ein Fahrzeug 118 dar, das mit einem Kraftstoff durch den Kraftstoffabgabepunkt 102 versorgt werden soll, also beispielsweise betankt werden soll. Es versteht sich, dass eine Mehrzahl von Abstellbereichen bzw. ein mehrteiliger Abstellbereich (z.B. auf beiden Seiten der Kraftstoffabgabevorrichtung 106) vorgesehen sein kann.

Bei bevorzugten Varianten der Anmeldung kann auf einem mobilen Endgerät 130 des Nutzers des zu betankenden Fahrzeugs 118 eine (nicht dargestellte) installierte Kraftstoffabgabeanwendung vorhanden sein, eingerichtet für eine Kommunikation mit der Tankstelle 174, um insbesondere eine Zuordnung des Nutzers zu einem von dem Nutzer verwendeten Kraftstoffabgabepunkt 102 zu ermöglichen.

Wie aus der Figur 1 zu erkennen ist, umfasst das Kraftstoffabgabesystem 100 anmeldungsgemäß mindestens eine erste Gruppenantennenanordnung 108. Die erste Gruppenantennenanordnung 108 kann vorzugsweise (systemweit eindeutig) dem ersten Kraftstoffabgabepunkt 102 zugeordnet sein. Insbesondere bilden die erste Gruppenantennenanordnung 108 und der erste Kraftstoffabgabepunkt 102 ein Abgabeset 107.

Die erste Gruppenantennenanordnung 108 ist vorliegend oberhalb des zugeordneten ersten Kraftstoffabgabepunkts 102 angeordnet. Anders ausgedrückt, ist die erste Gruppenantennenanordnung 108 zumindest vertikal beabstandet von dem ersten Kraftstoffabgabepunkt 102. Beispielsweise kann die Gruppenantennenanordnung 108 an einem Dach 114 der Kraftstoffabgabeanordnung 174 angeordnet sein und/oder in diesem integriert sein.

Bei anderen Varianten der Anmeldung kann die Gruppenantennenanordnung 108 alternativ oder zusätzlich an einem anderen Ort angeordnet sein, beispielsweise an und/oder in einem (ohnehin vorgesehenen) Mast, einer Anzeige oder dergleichen. Bei noch anderen Varianten der Anmeldung kann die Gruppenantennenanordnung 108 alternativ oder zusätzlich in oder an der Kraftstoffabgabevorrichtung 106 angeordnet sein, beispielsweise in der Säule 106 integriert sein.

Die erste Gruppenantennenanordnung 108 umfasst eine Mehrzahl von (gleich ausgebildeten) Forecourt-Antennen 110. Vorliegend sind beispielhaft drei Forecourt-Antennen 110 abgebildet. Es versteht sich, dass nur zwei oder mehr als drei Forecourt-Antennen vorgesehen sein können.

Wie zu erkennen ist, sind die Forecourt-Antennen 108 elektrisch miteinander verschaltet. Die Forecourt-Antennen 108 weisen insbesondere eine definierte Struktur und definierte Position zueinander auf, insbesondere einen definierten Abstand zueinander. Dies kann zumindest von der Frequenz des zu verarbeitenden Informationssignals abhängen. Beispielsweise können die Forecourt-Antennen 108, wie dargestellt, parallel zueinander, jeweils mit dem gleichen Abstand, angeordnet sein. Es versteht sich, dass auch andere Anordnungen möglich sind, wie die Anordnung entlang eines Halb- oder Viertelkreises.

Die erste Gruppenantennenanordnung 108 ist eingerichtet zum Verarbeiten mindestens eines Informationssignals, enthaltend mindestens einen modulierten Signalabschnitt und mindestens einen unmodulierten Signalabschnitt. Das verarbeitbare Informationssignal kann vorzugsweise ein Bluetooth-Informationssignal (zumindest der Version 5.X) sein. In diesem und den nachfolgenden Beispielen wird beispielhaft stets von einem derartigen Bluetooth-Informationssignal (insbesondere ein BLE-Advertising-Signal) ausgegangen. Die nachfolgenden Ausführungen lassen sich jedoch auf die zuvor beschriebenen anderen Informationssignale übertragen.

Insbesondere die anmeldungsgemäße Kombination einer Verwendung eines derartigen Informationssignals einer einem Kraftstoffabgabepunkt 102 zugeordneten Gruppenantennenanordnung 108 ermöglicht eine Bestimmung der Position eines mobilen Endgeräts 130 in Bezug zu der Gruppenantennenanordnung 108 bzw. des entsprechend zugeordneten Kraftstoffabgabepunkts 102 (mit einer besonders hohen Genauigkeit). Dies wird nachfolgend anhand der weiteren Ausführungsbeispiele näher erläutert.

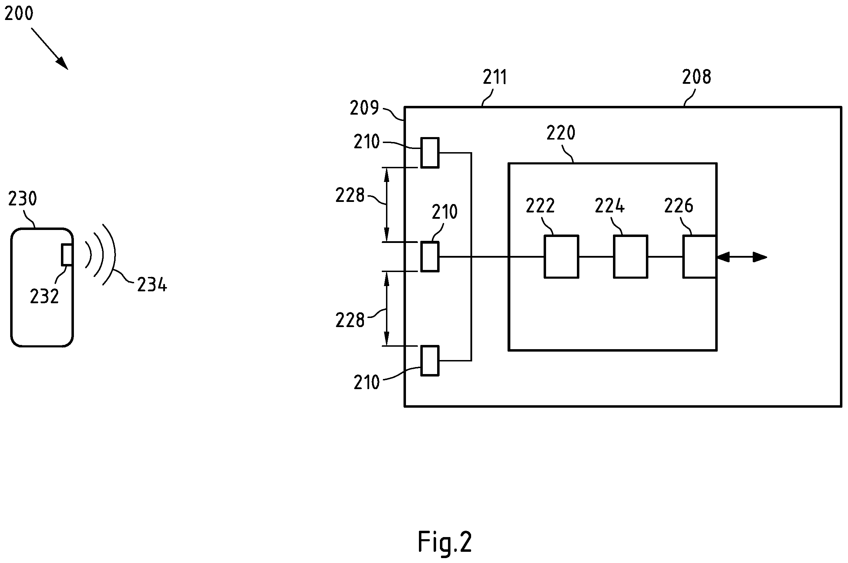

Die Figur 2 zeigt eine schematische Ansicht eines weiteren Ausführungsbeispiels eines Kraftstoffabgabesystems 200 gemäß der vorliegenden Anmeldung. Zur Vermeidung von Wiederholungen werden nachfolgend im Wesentlichen nur die Unterschiede zu dem vorherigen Ausführungsbeispiel beschrieben, und ansonsten wird auf die vorherigen Ausführungen verwiesen. Ferner sei angemerkt, dass zu Gunsten einer besseren Übersicht auf die Darstellung des Kraftstoffabgabepunkts verzichtet wurde. Das dargestellte Ausführungsbeispiel basiert insbesondere auf dem "Angle of Arrival" Schema.

Die dargestellte Gruppenantennenanordnung 208 umfasst eine Mehrzahl von Forecourt-Antennen 210, die parallel zueinander angeordnet sind. Zwischen jeden unmittelbar benachbarten Forecourt-Antennen 210 ist der gleiche Abstand 228 vorgesehen. Mit den Forecourt-Antennen 210 ist vorliegend eine Forecourt-Empfangseinrichtung 220 elektrisch verbunden.

Im vorliegenden Ausführungsbeispiel weist die Forecourt-Empfangseinrichtung 220 ein Demodulationsmodul 222, ein Positionsbestimmungsmodul 224 und eine Empfangseinrichtungs-Schnittstelle 226 auf. Es versteht sich, dass weitere Bauteile vorgesehen sein können, wie Filter, Verstärker, A/D-Wandler etc.

Jede Forecourt-Antenne 210 kann, basierend auf einem empfangenen Informationssignal, ein Antennensignal an das Demodulationsmodul 222 liefern. Das Demodulationsmodul 222 kann das jeweilige Antennensignal demodulieren. Insbesondere kann das Demodulationsmodul 222 eingerichtet sein, für jedes der Antennensignale ein Amplitudendatum und ein Phasendatum zu bestimmen. Vorzugsweise werden für den jeweiligen unmodulierten Signalabschnitt eines empfangenen Informationssignals ein Amplitudendatum und ein Phasendatum bestimmt.

Es versteht sich, dass auch eine Demodulation des modulierten Signalabschnitts des Informationssignals erfolgen kann, um den darin enthaltenden Dateninhalt (z.B. Nutzerkennung, Authentifizierungsdatum, Zeitstempel, Abrechnungsdaten und/oder dergleichen) zu decodieren und insbesondere auszuwerten.

Die bestimmten Daten können dem Positionsbestimmungsmodul 224 bereitgestellt werden. Das Positionsbestimmungsmodul 224 ist insbesondere eingerichtet zum Bestimmen eines ersten Winkeldatums, basierend auf den bestimmten Amplitudendaten und den bestimmten Phasendaten der demodulierten Antennensignale. Zumindest basierend auf dem ersten Winkeldatum können dann die augenblicklichen Positionsdaten des sendenden mobilen Endgeräts 230 zumindest teilweise bestimmt werden.

Das mobile Endgerät 230 kann über ein Kommunikationsmodul mit einer Antenne 232 verfügen, um (insbesondere periodisch und/oder nahezu kontinuierlich) das Informationssignal auszusenden. Mit dem Bezugszeichen 234 wird angedeutet, dass das mobile Endgerät 230 das Informationssignal im vorliegenden Beispiel aussendet.

Das Aussenden kann beispielsweise durch eine (nicht gezeigte) Kraftstoffabgabeanwendung gesteuert werden, die auf dem mobilen Endgerät 230 installiert ist. Beispielsweise kann ein Aussenden durch ein Auslösesignal ausgelöst werden, das von einer (nicht gezeigten) Sendeeinrichtung des Kraftstoffabgabesystems 200 ausgesendet wird. Beispielsweise kann ein (Bluetooth-) Beacon als Sendeeinrichtung vorgesehen sein, das ein Auslösesignal aussendet. Das Auslösesignal kann einen Code enthalten, der - nach einem Empfang durch das mobile Endgerät 230 - bei einer Ausführung des Codes durch das mobile Endgerät 230 (gesteuert durch eine aktivierte Kraftstoffabgabeanwendung) ein Aussenden des Informationssignals bewirkt. Die Kraftstoffabgabeanwendung kann beispielsweise von dem Nutzer vorher aktiviert werden oder durch ein Aufwecksignal einer weiteren (nicht gezeigten) Sendeeinrichtung des Kraftstoffabgabesystems 200, wie zuvor beschrieben wurde.

Die Gruppenantennenanordnung 208 kann in einem Antennengehäuse 211 mit einer Gehäusewand 209 gebildet sein, an die die Forecourt-Antennen angrenzen. Die Gehäusewand 209 kann aus einem Material (z. B. verzinnte Kupferfolie, Kunststoff, Glas, Gipskarton) gebildet sein, das elektromagnetische Signale dämpft und/oder filtert.

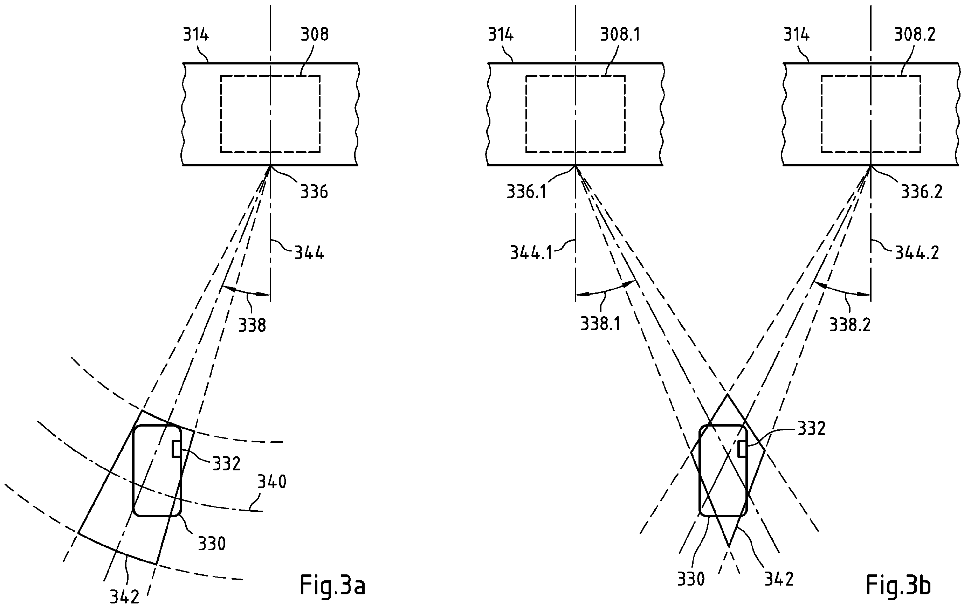

Die Positionsbestimmung durch das Positionsbestimmungsmodul 224 wird beispielhaft mit Hilfe der Figuren 3a und 3b näher beschrieben. In dem Ausführungsbeispiel nach Figur 3a erfolgt die Positionsbestimmung basierend auf dem ersten Winkeldatum und dem RSSI (der beispielsweise durch ein nicht dargestelltes RSSI-Modul der Gruppenantennenanordnung 208 in bekannter Weise bestimmt werden kann) des durch die Forecourt-Antennen 210 empfangenen Informationssignals.

Beispielhaft erfolgt die Bestimmung der Position in einem Polarkoordinatensystem (es versteht sich, dass in der Praxis auch ein Kugelkoordinatensystem vorgesehen sein kann). Der Ursprung 336 des Polarkoordinatensystems bildet vorliegend beispielhaft der Mittelpunkt der Gruppenantennenanordnung 308 (beispielsweise eine mittig angeordnete Forecourt-Antenne).

Vorliegend erstreckt sich senkrecht zu einer Unterseite (oder horizontalen Schnittebene) des Tankstellendachs 314 die Bezugsgerade 344, die in einer vertikalen Ebene liegt. Die Bezugsgerade 344 ist insbesondere die Polarachse 344 des Polarkoordinatensystems. Die Positionsdaten (z.B. in der Form {r, ϕ}) des mobilen Endgeräts 330 können durch das erste Winkeldatum 338 und den Radius 340, der aus dem RSSI bestimmt wird, gebildet sein.

Wie in der Figur 3a gezeigt ist, können ein Winkeldatumsbereich und ein Radiusbereich angegeben sein, bei dem die Messtoleranzen bei der Radius- und Winkelbestimmung berücksichtig sind. Die Positionsdaten können daher insbesondere den Bereich 342 angeben, in dem sich das mobile Endgerät 330 (und damit das Fahrzeug, in dem sich das mobile Endgerät 330 befindet) augenblicklich befindet.

In dem Ausführungsbeispiel nach Figur 3b erfolgt die Positionsbestimmung basierend auf dem ersten Winkeldatum 338.1 und einem weiteren Winkeldatum 338.2, welches von einer benachbarten Gruppenantennenanordnung 308.2 bestimmt wurde. Benachbart meint insbesondere, dass sich die Gruppenantennenanordnung 308.2 zumindest in der gleichen Kraftstoffabgabeanordnung befindet. Vorzugsweise sind die Gruppenantennenanordnungen 308.1, 308.2 unmittelbar benachbart zueinander angeordnet. In einem weiteren Ausführungsbeispiel kann die benachbarte Gruppenantennenanordnung 308.2 einem (unmittelbar) benachbarten Kraftstoffabgabepunkt zugeordnet sein.

Das Positionsbestimmungsmodul 224 bestimmt insbesondere den Schnittpunkt des ersten Winkeldatums 338.1 und des weiteren Winkeldatums 338.2, wie aus der Figur 3b ersichtlich ist. Um die Messtoleranzen zu berücksichtigen, kann der jeweilige Winkeldatumsbereich verwendet werden und der Schnittbereich 342 bestimmt werden. Die Positionsdaten können daher insbesondere den Bereich 342 angeben, in dem sich das mobile Endgerät 330 (und damit das Fahrzeug, in dem sich das mobile Endgerät 330 befindet) augenblicklich befindet.

Das weitere Winkeldatum 338.2 kann insbesondere über die Empfangseinrichtungs-Schnittstelle 226 bereitgestellt werden.

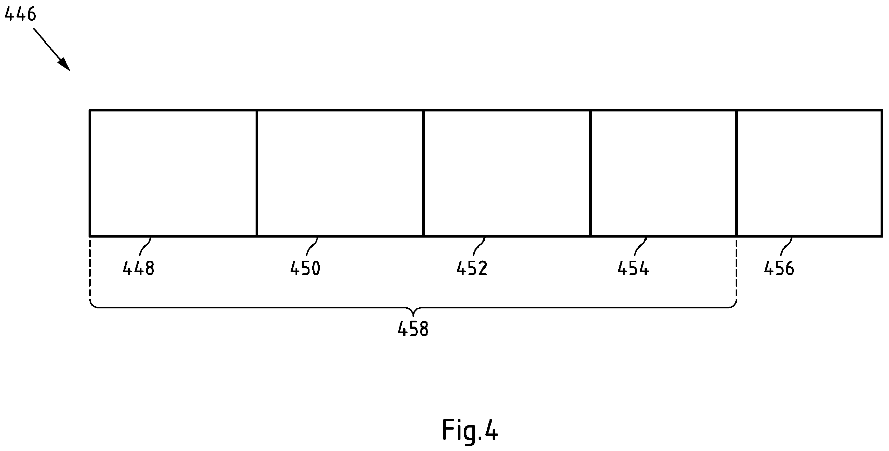

Die Figur 4 zeigt ein bevorzugtes Ausführungsbeispiel eines Informationssignals 446 gemäß der vorliegenden Anmeldung. Wie bereits beschrieben wurde, kann das Informationssignal 446 vorzugsweise ein Bluetooth-Informationssignal der Version 5.X sein (oder höher).

Das Informationssignal 446 ist gebildet aus einem modulierten Signalabschnitt 458 und einem unmodulierten Signalabschnitt 456. Der modulierte Signalabschnitt 458 enthält Dateninhalt und kann beispielhaft eine preamble 448 (z.B. 1 oder 2 Oktetts), ein access-address Feld (z.B. 4 Oktetts), ein PDU (Payload Data Unit) (z.B. 2 bis 248 Oktetts) und ein CRC (Cyclisch Redundanz Check) (z.B. 3 Oktetts) enthalten.

Der unmodulierte Signalabschnitt 456 kann zwischen 1 bis 300 µs unmodulierte Signaldauer umfassen, vorzugsweise 16 bis 160 µs. Insbesondere kann der unmodulierte Signalabschnitt 456 ein CTE (Constant Tone Extension) sein. Dieser wird insbesondere auch bei einem sogenannten "Whitening-Prozess" aus dem Informationssignal 446 nicht entfernt.

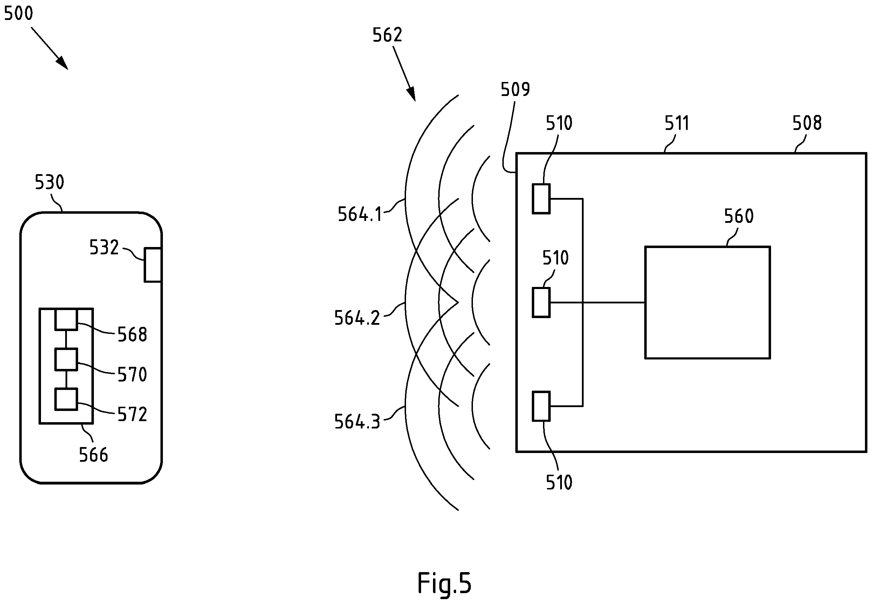

Die Figur 5 zeigt eine schematische Ansicht eines weiteren Ausführungsbeispiels eines Kraftstoffabgabesystems 500 gemäß der vorliegenden Anmeldung. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen. Ferner sei angemerkt, dass zu Gunsten einer besseren Übersicht auf die Darstellung des Kraftstoffabgabepunkts verzichtet wurde.

Das dargestellte Ausführungsbeispiel basiert insbesondere auf dem "Angle of Departure" Schema.

Die Gruppenantennenanordnung 508 umfasst eine Forecourt-Sendeeinrichtung 560, die elektrisch mit den Forecourt-Antennen 510 gekoppelt ist. Die Forecourt-Sendeeinrichtung 560 ist insbesondere zur Steuerung der Aussendung eines ersten Gruppeninformationssignals 562 eingerichtet. Das Gruppeninformationssignal 562 ist aus einer Mehrzahl von Einzelinformationssignalen 564.1, 564.2, 564.3 gebildet, die jeweils von den Forecourt-Antennen 510 ausgesendet werden. Ein Einzelinformationssignal 564.1, 564.2, 564.3 kann beispielsweise gebildet sein, wie in Figur 4 dargestellt.

Für eine optimierte Positionsbestimmung eines das Gruppeninformationssignal 562 empfangenden mobilen Endgeräts 530 kann die Forecourt-Sendeeinrichtung 560 eingerichtet sein zum Steuern des Aussendens des ersten Gruppeninformationssignals 562, derart, dass die jeweiligen unmodulierten Signalabschnitte der Einzelinformationssignale 564.1, 564.2, 564.3 des ersten Gruppeninformationssignals jeweils eine bestimmte Phasenbeziehung zueinander haben. Diese kann einer Endgeräte-Empfangseinrichtung 566 bekannt sein. Insbesondere kann dies bei der Positionsbestimmung berücksichtigt werden.

Wie ferner zu erkennen ist, weist das mobile Endgerät 530 eine Endgeräte-Empfangseinrichtung 566 auf, die insbesondere als Kraftstoffabgabeanwendung 566 gebildet ist. Die Kraftstoffabgabeanwendung 566 ist insbesondere als App auf dem mobilen Endgerät 530 (beispielsweise ein Smartphone 530) installiert.

Vorliegend umfasst die Kraftstoffabgabeanwendung 566 eine Mehrzahl von Software-Modulen 568, 570, 572. Beispielsweise kann eine Antenne 532 (via weitere Elemente, wie Filter, A/D-Wandler, Verstärker etc.) (digitale) Antennensignale einem Empfangsmodul 568 bereitstellen. Die (digitalen) Antennensignale basieren auf den empfangenen Einzelinformationssignalen 564.1, 564.2, 564.3.

Anders ausgedrückt ist das Empfangsmodul 568 eingerichtet zum Empfangen von Antennensignalen, die zumindest basieren auf den jeweiligen unmodulierten Signalabschnitten von Einzelinformationssignalen 564.1, 564.2, 564.3 eines durch eine Antenne 532 des mobilen Endgeräts 530 empfangenen Gruppeninformationssignals 562. Wie bereits beschrieben wurde, wird das Gruppeninformationssignal 562 von einer Gruppenantennenanordnung 508 mit einer Mehrzahl von benachbart zueinander angeordneten Forecourt-Antennen 510 ausgesendet. Hierbei ist die Gruppenantennenanordnung 508 vorzugsweise einem bestimmten Kraftstoffabgabepunkt zugeordnet, wie zuvor beschrieben wurde.

Mindestens ein Positionsbestimmungsmodul 572 ist in der Kraftstoffabgabeanwendung 566 vorgesehen, eingerichtet zum Bestimmen von Positionsdaten des das Gruppeninformationssignal 562 empfangenden mobilen Endgeräts 530. Dies erfolgt insbesondere basierend auf dem unmodulierten Signalabschnitt des Gruppeninformationssignals 562, also den jeweiligen unmodulierten Signalabschnitten der jeweiligen Einzelinformationssignale 564.1, 564.2, 564.3 des Gruppeninformationssignals 562.

Die Kraftstoffabgabeanwendung 566 kann insbesondere ein Demodulationsmodul 570 aufweisen. Das Demodulationsmodul 570 kann (insbesondere in analoger Weise zu den vorherigen Ausführungen) die Antennensignale demodulieren. Insbesondere kann für jedes Antennensignal ein Amplitudendatum und ein Phasendatum bereitgestellt werden. Die Daten können dem Positionsbestimmungsmodul 572 bereitgestellt werden.

Das Positionsbestimmungsmodul 572 kann (insbesondere in analoger Weise zu den vorherigen Ausführungen) die Positionsdaten des mobilen Endgeräts 530 bestimmen, zumindest basierend auf den bereitgestellten Amplituden- und Phasendaten eines ersten Gruppen-Antennensignals 562.

Ferner kann die Positionsbestimmung auf einem RSSI des Gruppen-Antennensignals 562 basieren. Dies kann insbesondere in analoger Weise zu den Ausführungen zur Figur 3a erfolgen.

Alternativ oder zusätzlich kann das Positionsbestimmungsmodul 572 eingerichtet sein zum Bestimmen der Positionsdaten des mobilen Endgeräts 530, basierend auf den demodulierten ersten Antennensignalen und auf demodulierten zweiten Antennensignalen eines weiteren Gruppeninformationssignals. Das weitere Gruppeninformationssignal kann ausgesendet worden sein durch eine benachbart zu der ersten Gruppenantennenanordnung angeordnete weitere Gruppenantennenanordnung (die insbesondere zumindest der gleichen Kraftstoffabgabeanordnung zugeordnet sein kann).

Wie bereits beschrieben wurde, kann in den jeweiligen Einzelinformationssignalen 564.1, 564.2, 564.3 in den entsprechenden modulierten Signalabschnitten zumindest eine (systemweit eineindeutige, zumindest eineindeutig in der Kraftstoffabgabeanordnung) Kraftstoffabgabepunktkennung als Dateninhalt enthalten sein. Basierend auf der Kraftstoffabgabepunktkennung kann das Positionsbestimmungsmodul 572 den sendenden Kraftstoffabgabepunkt bzw. die diesem Kraftstoffabgabepunkt zugeordnete Gruppenantennenanordnung 508 identifizieren.

Nachdem die Winkeldaten zweier Gruppeninformationssignale unterschiedlicher Kraftstoffabgabepunkte (bestimmt durch die jeweilige Kraftstoffabgabepunktkennung (z.B. Säulennummer), optional mit einer Kraftstoffabgabeanordnungskennung) bestimmt wurden, kann insbesondere in analoger Weise zu den Ausführungen zur Figur 3b eine Bestimmung der Positionsdaten des mobilen Endgeräts 530 durch das Positionsbestimmungsmodul 572 erfolgen.

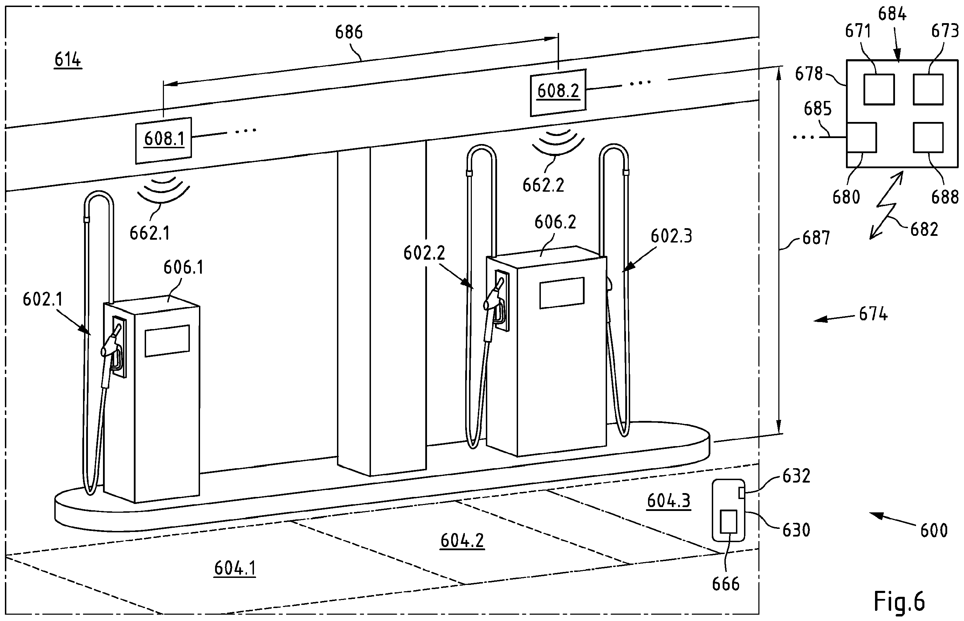

Die Figur 6 zeigt eine schematische Ansicht eines weiteren Ausführungsbeispiels eines Kraftstoffabgabesystems 600 gemäß der vorliegenden Anmeldung. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen, insbesondere auf die Ausführungen zur Figur 5. Das dargestellte Ausführungsbeispiel basiert insbesondere auf dem "Angle of Departure" Schema.

Das Kraftstoffabgabesystem 600 umfasst vorliegend mindestens eine Kraftstoffabgabeanordnung 674, beispielhaft in Form einer Tankstelle 674. Die Tankstelle 674 umfasst vorliegend zwei Kraftstoffabgabevorrichtungen 606.1, 606.2 (insbesondere Zapfsäulen 606.1, 606.2), wobei die erste Kraftstoffabgabevorrichtung 606.1 einen ersten Kraftstoffabgabepunkt 602.1 (Zapfpunkt 602.1) und die zweite Kraftstoffabgabevorrichtung 606.2 einen zweiten und einen dritten Kraftstoffabgabepunkt 602.2, 602.3 aufweist.

Vorzugsweise kann eine Vielzahl von weiteren Kraftstoffabgabevorrichtungen und/oder -punkten vorgesehen sein, und/oder das Kraftstoffabgabesystem 600 kann eine Vielzahl von (entfernt zueinander angeordneten) Kraftstoffabgabeanordnungen umfassen.

Wie aus der Figur 6 zu erkennen ist, ist vorliegend eine erste Gruppenantennenanordnung 608.1 dem ersten Kraftstoffabgabepunkt 602.1 zugeordnet. Vorliegend ist dies gleichbedeutend mit einer Zuordnung der ersten Gruppenantennenanordnung 608.1 zu der ersten Kraftstoffabgabevorrichtung 606.1. Die zweite Gruppenantennenanordnung 608.2 ist dem zweiten und dem dritten Kraftstoffabgabepunkt 602.2, 602.3 zugeordnet. Vorliegend ist dies gleichbedeutend mit einer Zuordnung der zweiten Gruppenantennenanordnung 608.1 zu der zweiten Kraftstoffabgabevorrichtung 606.2. Beispielsweise kann eine jeweilige Gruppenantennenanordnung 608.1, 608.2 an oder in dem Dach 614 der Tankstelle 674 angeordnet sein.

Die Struktur der (zu Gunsten einer besseren Übersicht nicht im Detail dargestellten) Forecourt-Antennen kann gleich gebildet sein. Insbesondere kann jeweils die gleiche Gruppenantennenanordnung 608.1, 608.2 angeordnet sein.

Zudem können die Forecourt-Antennen in oder an dem Dach 614 an der gleichen Stelle zueinander angeordnet sein. Insbesondere ist zwischen jeder unmittelbar benachbarten Gruppenantennenanordnung 608.1, 608.2 der horizontale Abstand 686 gleich. Zudem kann vorzugsweise die (vertikale) Höhe 687 jeder unmittelbar benachbarten Gruppenantennenanordnung 608.1, 608.2 gleich sein.

Insbesondere kann dies bei jeder Kraftstoffabgabeanordnung des Kraftstoffabgabesystems der Fall sein. Hierdurch kann eine einfachere Einstellung der elektrischen Bauteile und/oder des Positionsbestimmungsalgorithmus erfolgen. Daher kann insbesondere eine einfachere Installierung einer Kraftstoffabgabeanordnung erfolgen. Insbesondere kann das sogenannte "Finetuning" am Installationsort der Kraftstoffabgabeanordnung mit einem geringeren Aufwand durchgeführt werden oder sogar ganz entfallen. Es versteht sich, dass bei anderen Varianten auch andere geometrische Anordnungen vorgesehen sein können. Diese können jedoch im System als bekannt vorausgesetzt werden.

Darüber hinaus ist im vorliegenden Ausführungsbeispiel zusätzlich jedem Kraftstoffabgabepunkt 602.1, 602.2, 602.3 jeweils ein Abstellbereich 604.1, 604.2, 604.3 zugeordnet. Ein Abstellbereich 604.1, 604.2, 604.3 eines Kraftstoffabgabepunkts 602.1, 602.2, 602.3 ist insbesondere der Parkbereich, auf dem ein Nutzer (aller Voraussicht nach) sein zu tankendes Fahrzeug abstellen wird, wenn er sein Fahrzeug an diesem Kraftstoffabgabepunkt 602.1, 602.2, 602.3 betanken möchte. Wie zu erkennen ist, können sich die Abstellbereiche 604.1, 604.2, 604.3 teilweise überlappen.

Wie noch näher beschrieben wird, kann durch die Positionsbestimmung des mobilen Endgeräts 630 festgestellt werden, in welchem Abstellbereich 604.1, 604.2, 604.3 sich das mobile Endgerät 630 befindet. Basierend auf den vorbestimmten Zuordnungen des jeweiligen Abstellbereichs 604.1, 604.2, 604.3 zu dem jeweiligen Kraftstoffabgabepunkt 602.1, 602.2, 602.3 kann dann durch ein Kraftstoffabgabepunktbestimmungsmodul 671 der Kraftstoffabgabepunkt 602.1, 602.2, 602.3 bestimmt werden, den der Nutzer des mobilen Endgeräts 630 verwendet.

Ferner umfasst das vorliegende Kraftstoffabgabesystem 600 ein Backendsystem 678. Das Backendsystem 678 kann aus einem oder mehreren Server(n) gebildet sein, der/die beispielsweise entfernt von der mindestens einen Tankstelle 674 angeordnet ist/sind. Das Backendsystem 678 weist mindestens ein Kommunikationsmodul 680, 688 auf. Das mindestens eine Kommunikationsmodul 680, 688 kann eingerichtet sein zum Kommunizieren mit einem mobilen Endgerät 630. Für den Fall, dass unterschiedliche Übertragungstechnologien vorgesehen sind, kann eine entsprechende Anzahl unterschiedlicher Kommunikationsmodule 680, 688 vorgesehen sein. Bei anderen Varianten kann alternativ oder zusätzlich eine lokale Rechenvorrichtung der Kraftstoffabgabeanordnung vorgesehen sein.

Über mindestens ein (drahtloses und/oder drahtgebundenes) Kommunikationsnetz 685 können das Backendsystem 678 und die Gruppenantennenanordnungen 608.1, 608.2 kommunizieren.

Das Backendsystem 678 umfasst vorliegend das bereits beschriebene Kraftstoffabgabepunktbestimmungsmodul 671 und ein Abrechnungsmodul 673. Das Abrechnungsmodul 673 ist insbesondere zum Abrechnen eines durchgeführten Kraftstoffabgabevorgangs eingerichtet. So kann beispielsweise von einem nicht dargestellten Messmodul einer Kraftstoffabgabevorrichtung die während eines Kraftstoffabgabevorgangs abgegebene Kraftstoffmenge gemessen werden. Die gemessene Kraftstoffmenge kann dem Abrechnungsmodul 673 bereitgestellt werden.

Das Abrechnungsmodul 673 kann, basierend auf der gemessenen Kraftstoffmenge, einer Preisangabe und beispielsweise in dem Nutzerkonto eines registrierten Nutzers gespeicherten Abrechnungsdaten (z.B. Kreditkartennummer, Kontodaten etc.), eine (automatische) Abrechnung durchführen. Beispielsweise kann eine entsprechende Abrechnungsnachricht an das mobile Endgerät gesendet werden, und ein fiskalisch gültiger Kassenbeleg kann an eine zu dem Nutzer hinterlegte E-Mail-Adresse (oder dergleichen) gesendet werden. Der Nutzer kann insbesondere aufgrund der genannten Bestimmung des verwendeten Kraftstoffabgabepunkts einem durchgeführten Kraftstoffabgabevorgang zugeordnet werden.

Nutzerkonten bzw. (vorbeschriebene) Nutzerdaten von registrierten Nutzern können insbesondere in einem nicht gezeigten Datenspeichermodul des Backendsystem 678 gespeichert sein.

Das dargestellte mobile Endgerät 630 weist insbesondere eine zuvor beschriebene Kraftstoffabgabeanwendung 666 auf (zu Gunsten einer besseren Übersicht wurde auf eine Darstellung der einzelnen Module verzichtet).

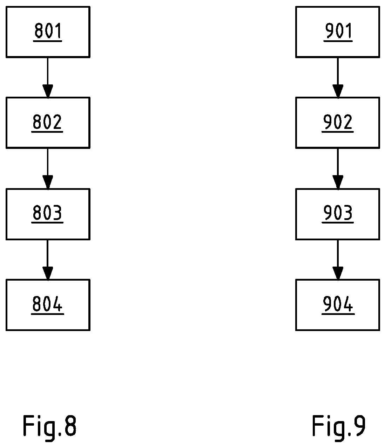

Die Funktionsweise wird nachfolgend näher mit Hilfe der Figur 8 erläutert. Die Figur 8 zeigt ein Diagramm eines Ausführungsbeispiels eines Verfahrens gemäß der vorliegenden Anmeldung, insbesondere zum Betreiben bzw. Ausführen einer Kraftstoffabgabeanwendung 666.

Während des Betriebs des Kraftstoffabgabesystems 600 sendet jede Gruppenantennenanordnung 608.1, 608.2 (periodisch, nahezu kontinuierlich) die genannten Gruppeninformationssignale 662.1, 662.2 aus.

Gelangt ein mobiles Endgerät 630 in die Reichweite (die insbesondere zumindest die Abstellbereiche 604.1, 604.2, 604.3 abdeckt) mindestens einer Gruppenantennenanordnung 608.1, 608.2, empfängt eine (Bluetooth-) Antenne 632 das Gruppeninformationssignal 662.1, 662.2 (bzw. die jeweiligen Einzelinformationssignale). Die Antenne 632 des mobilen Endgeräts 630 (und weitere Bauelemente, wie Filter, Verstärker, A/D-Wandler etc.) kann die jeweiligen Antennensignale einer aktivierten Kraftstoffabgabeanwendung 666 bzw. einer Endgeräte-Empfangseinrichtung 666 bereitstellen.

In einem Schritt 801 erfolgt ein Empfangen, insbesondere durch mindestens ein Empfangsmodul (welches insbesondere als bidirektionale Schnittstelle gebildet sein kann), der genannten Antennensignale. Diese basieren zumindest auf den jeweiligen unmodulierten Signalabschnitten von Einzelinformationssignalen eines durch eine Antenne 632 des mobilen Endgeräts 630 empfangenen Gruppeninformationssignals 662.1, 662.2.

In den Schritten 802 und 803 erfolgt ein Bestimmen von Positionsdaten des das Gruppeninformationssignal empfangenen mobilen Endgeräts 630 (und damit des Nutzers). Dies erfolgt zumindest basierend auf den unmodulierten Signalabschnitten der Einzel-Informationssignale.

Insbesondere kann in Schritt 802 in zuvor beschriebener Weise eine I&Q-Demodulation durch ein Demodulationsmodul der Kraftstoffabgabeanwendung 666 durchgeführt werden. Anschließend können in Schritt 803 in zuvor beschriebener Weise die (augenblicklichen) Positionsdaten des mobilen Endgeräts 630 bestimmt werden.

In Schritt 804 erfolgt insbesondere ein Bewirken eines Aussendens, durch die Kraftstoffabgabeanwendung 666 (beispielsweise die bidirektionale Schnittstelle oder ein Sendemodul), zumindest der bestimmten Positionsdaten.

Bei einem bevorzugten Beispiel kann ein Datensatz durch das mobile Endgerät 630 ausgesendet werden, enthaltend vorzugsweise die durch das mindestens eine Gruppeninformationssignal empfangene Kraftstoffabgabepunktkennung, mindestens ein Authentifizierungsdatum, wie eine Nutzerkennung (z.B. ein Nutzername, Fahrzeugkennzeichen des Fahrzeugs des Nutzers, eine Endgerätekennung des mobilen Endgeräts des Nutzers, wie die IMEI, etc.) und/oder Abrechnungsdaten. Es versteht sich, dass weitere Daten enthalten sein können, wie ein Zeitstempel.

Dieser Datensatz kann über ein Kommunikationsnetz 682 an das Backendsystem 678 übertragen werden. Das Backendsystem 678 kann die Nutzerkennung und/oder das Authentifizierungsdatum optional prüfen.

Vorzugsweise kann das Kraftstoffabgabepunktbestimmungsmodul 671 den von dem Nutzer verwendeten Kraftstoffabgabepunkt 602.1, 602.2, 602.3 bestimmen, zumindest basierend auf den Positionsdaten und insbesondere den vorbestimmten Zuordnungen der Abstellbereiche 604.1, 604.2, 604.3 zu den jeweiligen Kraftstoffabgabepunkten 602.1, 602.2, 602.3.

Vorliegend kann beispielsweise durch das Kraftstoffabgabepunktbestimmungsmodul 671 festgestellt werden, dass sich das mobile Endgerät 630 aufgrund seiner übertragenen Positionsdaten in einem bestimmten Abstellbereich 604.3 befindet. Da dieser Abstellbereich 604.3 dem dritten Kraftstoffabgabepunkt 602.3 zugeordnet ist, kann dieser als verwendeter Kraftstoffabgabepunkt 602.3 bestimmt werden.

Vorzugsweise können dem Backendsystem 678 weitere Sensorikdaten und dergleichen über einen weiteren Eingang 684 bereitgestellt werden. Diese können insbesondere zur Verifikation der Positionsdaten des Nutzers bzw. seines Fahrzeugs und/oder zur Bestimmung des verwendeten Kraftstoffabgabepunkts 602.1, 602.2, 602.3 berücksichtigt werden. Beispielsweise können die augenblicklich verfügbaren bzw. nicht verfügbaren Kraftstoffabgabepunkte 602.1, 602.2, 602.3 bereitgestellt werden. Insbesondere wenn die Positionsdaten des mobilen Endgeräts 630 indizieren, dass zwei verschiedene Kraftstoffabgabepunkte 602.1, 602.2, 602.3 in Betracht kommen können. Wenn festgestellt wird, dass einer dieser Kraftstoffabgabepunkte 602.1, 602.2, 602.3 nicht verfügbar ist, kann in sicherer Weise der zu verwendende Kraftstoffabgabepunkt 602.1, 602.2, 602.3 bestimmt werden. Bei anderen Varianten können, alternativ oder zusätzlich, Bilddaten von mindestens einer Kamera bereitgestellt und durch ein (nicht gezeigtes) Bildauswertemodul ausgewertet werden, wie bereits beschrieben wurde.

Wie bereits beschrieben wurde, können die Schritte 801 bis 804 periodisch, nahezu kontinuierlich durchgeführt werden, um ein Bewegungsprofil des mobilen Endgeräts 630 zu erhalten.

In einem (nicht dargestellten) weiteren Schritt kann ein Abrechnen, durch das Abrechnungsmodul 673, des durchgeführten Kraftstoffabgabevorgang erfolgen, wie insbesondere zuvor beschrieben wurde.

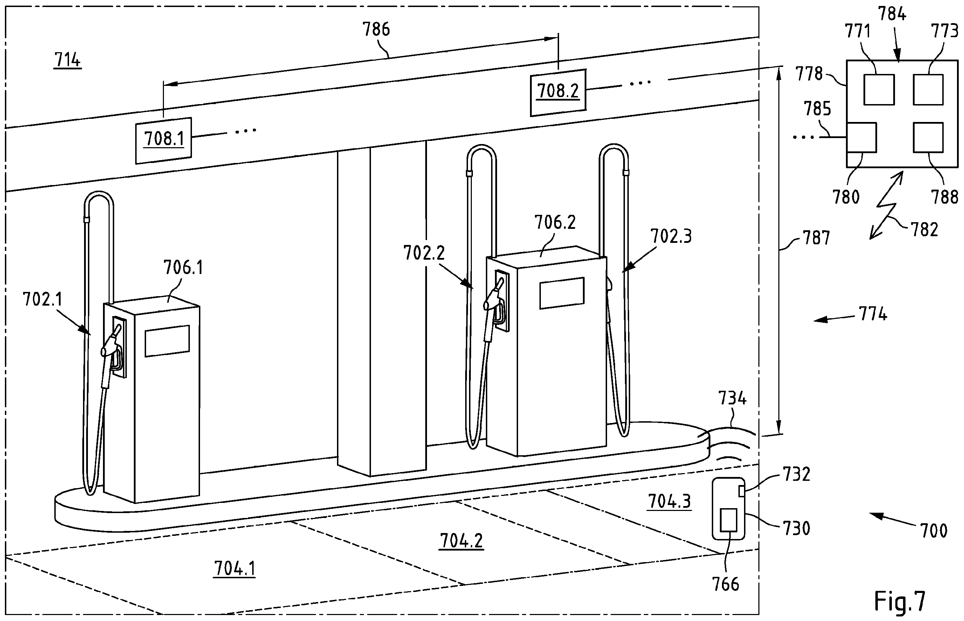

Die Figur 7 zeigt eine schematische Ansicht eines weiteren Ausführungsbeispiels eines Kraftstoffabgabesystems 700 gemäß der vorliegenden Anmeldung. Zur Vermeidung von Wiederholungen werden nachfolgend im Wesentlichen nur die Unterschiede zu den vorherigen Ausführungsbeispielen beschrieben, und ansonsten wird auf die vorherigen Ausführungen verwiesen, insbesondere auf die Ausführungen zu den Figuren 2 und 6. Das dargestellte Ausführungsbeispiel basiert insbesondere auf dem "Angle of Arrival" Schema.

Im Vergleich zu dem Ausführungsbeispiel der Figur 6 sind vorliegend den Kraftstoffabgabepunkten 702.1, 702.2, 702.3 zugeordnete Gruppenantennenanordnungen 708.1, 708.2 vorgesehen, die jeweils über eine (nicht gezeigte) Forecourt-Empfangseinrichtung verfügen. Das mobile Endgerät 730 verfügt über eine (aktivierte) Kraftstoffabgabeanwendung, die ein Aussenden eines Informationssignals bewirkt. Beispielsweise kann die Kraftstoffabgabeanwendung durch den Erhalt eines ersten (BT-)Beacon-Signals geweckt, also aktiviert worden sein. Durch das gleiche Signal oder ein weiteres (BT-)Beacon-Signal kann die Kraftstoffabgabeanwendung veranlasst werden, ein (periodisches, nahezu kontinuierliches) Aussenden des Informationssignals 734 zu bewirken.

Die Funktionsweise wird nachfolgend näher mit Hilfe der Figur 9 erläutert. Die Figur 9 zeigt ein Diagramm eines Ausführungsbeispiels eines Verfahrens gemäß der vorliegenden Anmeldung, insbesondere zum Betreiben eines Kraftstoffabgabesystems 700, insbesondere der Kraftstoffabgabepunkte 702.2, 702.3.

Wie bereits beschrieben wurde, kann eine aktivierte Kraftstoffabgabeanwendung eines mobilen Endgeräts 730 bewirken, dass ein Informationssignal 734 (periodisch, nahezu kontinuierlich) ausgesendet wird. Das Informationssignal 734 kann in seinem modulierten Signalabschnitt als Dateninhalt zumindest ein Authentifizierungsdatum enthalten, wie eine Nutzerkennung (z.B. ein Nutzername, Fahrzeugkennzeichen des Fahrzeugs des Nutzers, eine Endgerätekennung des mobilen Endgeräts des Nutzers, wie die IMEI, etc.) und/oder dergleichen.

In einem Schritt 901 erfolgt ein Empfangen, durch die Forecourt-Antennen mindestens einer Gruppenantennenanordnung 708.1, 708.2, die mindestens einem Kraftstoffabgabepunkt 702.1, 702.2, 702.3 zugeordnet sind, des Informationssignals 734. Neben dem genannten modulierten Signalabschnitt enthält das Informationssignal 734 mindestens einen unmodulierten Signalabschnitt.

In Schritt 902 erfolgt ein Bereitstellen, durch die Forecourt-Antennen, von Antennensignalen, die jeweils auf dem unmodulierten Signalabschnitt des Informationssignals basieren, wie bereits beschrieben wurde.

Anschließend erfolgt in Schritt 903 ein Bestimmen von Positionsdaten des das Informationssignal 734 aussendenden mobilen Endgeräts 730, zumindest basierend auf dem unmodulierten Signalabschnitt des Informationssignals 734. Wie bereits beschrieben wurde, können insbesondere zunächst eine Demodulation und danach eine Positionsbestimmung erfolgen.

Die bestimmten Positionsdaten können in Schritt 904 einer lokalen Rechenvorrichtung und/oder einem Backendsystem 778 zur Verfügung gestellt werden. Insbesondere kann erneut ein Bestimmen des verwendeten Kraftstoffabgabepunkts erfolgen, wie zuvor beschrieben wurde (siehe z.B. Ausführungen zur Fig. 6). Zusätzlich kann einer lokalen Rechenvorrichtung und/oder dem Backendsystem 778 der Dateninhalt des Informationssignals 734 zur Verfügung gestellt werden.

Beispielsweise kann für die Überprüfung eine Kommunikation mit dem Backendsystem 778 erfolgen, das insbesondere einen Datenabgleich zwischen dem Authentifizierungsdatum und gespeicherten Nutzerdaten durchführen kann. Die über einen weiteren Eingang 784 des Backendsystems 778 und/oder das mindestens eine Kommunikationsmodul 780, 788 evtl. erhaltenen zusätzlichen Sensordaten, wie Kameradaten, RF-Sensorikdaten, Daten über die Verfügbarkeit von Kraftstoffabgabepunkten und/oder dergleichen, können zur Verfügung gestellt werden.

Wie bereits beschrieben wurde, können die Schritte 901 bis 904 periodisch, nahezu kontinuierlich durchgeführt werden, um ein Bewegungsprofil des mobilen Endgeräts 730 zu erhalten.

## Patentansprüche

1. Kraftstoffabgabesystem (100, 200, 500, 600, 700), umfassend:
- mindestens eine Kraftstoffabgabeanordnung (174, 674, 774) mit mindestens einem ersten Kraftstoffabgabepunkt (102, 602.1, 602.2, 602.3, 702.1, 702.2, 702.3), eingerichtet zur Abgabe von Kraftstoff an ein Fahrzeug (118), **dadurch gekennzeichnet, dass**
- das Kraftstoffabgabesystem (100, 200, 500, 600, 700) mindestens eine erste zumindest dem ersten Kraftstoffabgabepunkt (102, 602.1, 602.2, 602.3, 702.1, 702.2, 702.3) zuordenbare Gruppenantennenanordnung (108, 208, 308, 308.1, 308.2, 508, 608.1, 608.2, 708.1, 708.2) umfasst, eingerichtet zum Verarbeiten mindestens eines Informationssignals (234, 446, 562, 564.1, 564.2, 564.3, 662.1, 662.2, 734), enthaltend mindestens einen modulierten Signalabschnitt (458) und mindestens einen unmodulierten Signalabschnitt (456),
- wobei die erste Gruppenantennenanordnung (108, 208, 308, 308.1, 308.2, 508, 608.1, 608.2, 708.1, 708.2) eine Mehrzahl von benachbart zueinander angeordneten Forecourt-Antennen (110, 210, 510) umfasst.

2. Kraftstoffabgabesystem (100, 200, 700) nach Anspruch 1, **dadurch gekennzeichnet, dass**
- die erste Gruppenantennenanordnung (108, 208, 308, 308.1, 308.2, 508, 608.1, 608.2, 708.1, 708.2) mindestens eine mit den Forecourt-Antennen (110, 210) gekoppelte Forecourt-Empfangseinrichtung (220) umfasst, und
- die Forecourt-Empfangseinrichtung (220) eingerichtet ist zum Bestimmen von Positionsdaten (338, 338.1, 338.2, 340, 342) eines das Informationssignal (234, 446, 734) aussendenden mobilen Endgeräts (130, 230, 330, 730), zumindest basierend auf dem unmodulierten Signalabschnitt (456) eines empfangenen Informationssignals (234, 446, 734).

3. Kraftstoffabgabesystem (100, 200, 700) nach Anspruch 2, **dadurch gekennzeichnet, dass**
- jede der Forecourt-Antennen (110, 210) eingerichtet ist zum Bereitstellen eines Antennensignals, basierend auf dem unmodulierten Signalabschnitt (456) des empfangenen Informationssignals (234, 446, 734), und
- die Forecourt-Empfangseinrichtung (220) mindestens ein Demodulationsmodul (222) umfasst, eingerichtet zum Demodulieren der bereitgestellten Antennensignale.

4. Kraftstoffabgabesystem (100, 200, 700) nach Anspruch 3, **dadurch gekennzeichnet, dass**
- das Demodulationsmodul (222) eingerichtet ist zum Demodulieren der bereitgestellten Antennensignale, derart, dass für jedes der Antennensignale ein Amplitudendatum und ein Phasendatum des unmodulierten Signalabschnitts (456) bestimmt wird.

5. Kraftstoffabgabesystem (100, 200, 700) nach Anspruch 3 und 4, **dadurch gekennzeichnet, dass**
- die Forecourt-Empfangseinrichtung (220) mindestens ein Positionsbestimmungsmodul (224) umfasst, eingerichtet zum Bestimmen eines ersten Winkeldatums, basierend auf den bestimmten Amplitudendaten und den bestimmten Phasendaten der Antennensignale, und
- das Positionsbestimmungsmodul (224) eingerichtet ist zum zumindest teilweisen Bestimmen der Positionsdaten, zumindest basierend auf dem bestimmten ersten Winkeldatum.

6. Kraftstoffabgabesystem (100, 200, 700) nach Anspruch 5, **dadurch gekennzeichnet, dass**
- das Positionsbestimmungsmodul (224) eingerichtet ist zum Bestimmen der Positionsdaten, basierend auf dem bestimmten ersten Winkeldatum und dem RSSI des durch die Forecourt-Antennen (110, 210) empfangenen Informationssignals (234, 446, 734).

7. Kraftstoffabgabesystem (100, 500, 600) nach Anspruch 1, **dadurch gekennzeichnet, dass**
- die erste Gruppenantennenanordnung (108, 508, 608.1, 608.2) mindestens eine mit den Forecourt-Antennen (110, 510) gekoppelte Forecourt-Sendeeinrichtung (560) umfasst, eingerichtet zum Steuern eines Aussendens eines ersten Gruppeninformationssignals (562, 662.1, 662.1) durch die Forecourt-Antennen (110, 510),
- wobei das erste Gruppeninformationssignal (562, 662.1, 662.1) eine Mehrzahl von Einzelinformationssignalen (446, 564.1, 564.2, 564.3) enthält, die jeweils von den Forecourt-Antennen (110 510) ausgesendet werden.

8. Kraftstoffabgabesystem (100, 500, 600) nach Anspruch 7, **dadurch gekennzeichnet, dass**
- die Forecourt-Sendeeinrichtung (560) eingerichtet ist zum Steuern des Aussendens des ersten Gruppeninformationssignals (562, 662.1, 662.1), derart, dass die jeweiligen unmodulierten Signalabschnitte (456) der Einzelinformationssignale (446, 564.1, 564.2, 564.3) des ersten Gruppeninformationssignals (562, 662.1, 662.1) jeweils eine bestimmte Phasenbeziehung zueinander haben.

9. Kraftstoffabgabesystem (100, 500, 600) nach Anspruch 7 oder 8, **dadurch gekennzeichnet, dass**
- das Kraftstoffabgabesystem (100, 500, 600) mindestens eine in einem mobilen Endgerät (130, 530, 630) angeordnete Endgeräte-Empfangseinrichtung (566, 666) umfasst, die mit einer Antenne (532, 632) des mobilen Endgeräts (130, 530, 630) gekoppelt ist,
- wobei die Endgeräte-Empfangseinrichtung (566, 666) mindestens ein Demodulationsmodul (570) umfasst, eingerichtet zum Demodulieren von ersten Antennensignalen, die aus dem durch die Antenne (532, 632) des mobilen Endgeräts (130, 530, 630) empfangenen ersten Gruppeninformationssignal (562, 662.1, 662.1) resultieren.

10. Kraftstoffabgabesystem (100, 500, 600) nach Anspruch 9, **dadurch gekennzeichnet, dass**
- die Endgeräte-Empfangseinrichtung (566, 666) mindestens ein Positionsbestimmungsmodul (572) umfasst, eingerichtet zum Bestimmen von Positionsdaten des mobilen Endgeräts (130, 530, 630), basierend auf den demodulierten ersten Antennensignalen, insbesondere des für jedes erste Antennensignal bestimmten Phasendatums und des für jedes erste Antennensignal bestimmten Amplitudendatums.

11. Kraftstoffabgabesystem (100, 500, 600) nach Anspruch 10, **dadurch gekennzeichnet, dass**
- das Positionsbestimmungsmodul (572) eingerichtet ist zum Bestimmen der Positionsdaten des mobilen Endgeräts (130, 530, 630), basierend auf den demodulierten ersten Antennensignalen und dem RSSI des durch die Antenne (532, 632) des mobilen Endgeräts (130, 530, 630) empfangenen ersten Informationssignals,
und/oder
- das Positionsbestimmungsmodul (572) eingerichtet ist zum Bestimmen der Positionsdaten des mobilen Endgeräts (130, 530, 630), basierend auf den demodulierten ersten Antennensignalen und auf demodulierten zweiten Antennensignalen eines weiteren Gruppeninformationssignals (562, 662.1, 662.2), das durch eine benachbart zu der ersten Gruppenantennenanordnung (108, 508, 608.1, 608.2) angeordneten weiteren Gruppenantennenanordnung (108, 508, 608.1, 608.2) ausgesendet wurde.

12. Kraftstoffabgabesystem (100, 200, 500, 600, 700) nach einem der vorherigen Ansprüche, **dadurch gekennzeichnet, dass**
- das Kraftstoffabgabesystem (100, 200, 500, 600, 700) mindestens ein Kraftstoffabgabepunktbestimmungsmodul (671, 771) umfasst, eingerichtet zum Bestimmen des von dem Nutzer des mobilen Endgeräts (130,) verwendeten Kraftstoffabgabepunkts (102, 602.1, 602.2, 602.3, 702.1, 702.2, 702.3), zumindest basierend auf den bestimmten Positionsdaten des mobilen Endgeräts (130, 230, 330, 530, 630, 730) des Nutzers.

13. Verfahren zum Betreiben eines Kraftstoffabgabesystems (100, 200, 700) mit mindestens einem Kraftstoffabgabepunkt (102, 702.1, 702.2), wobei dem Kraftstoffabgabepunkt (102, 702.1, 702.2) mindestens eine Gruppenantennenanordnung (108, 208, 308, 308.1, 308.2, 708.1, 708.2) zugeordnet ist, die eine Mehrzahl von benachbart zueinander angeordneten Forecourt-Antennen (110, 210) und eine mit den Forecourt-Antennen (110, 210) gekoppelte Empfangseinrichtung (220) umfasst, das Verfahren umfassend:
- Empfangen, durch die Forecourt-Antennen (110, 210), eines Informationssignals (446), das mindestens einen modulierten Signalabschnitt (458) und mindestens einen unmodulierten Signalabschnitt (456) enthält,
- Bereitstellen, durch die Forecourt-Antennen (110, 210), von Antennensignalen, die jeweils auf dem unmodulierten Signalabschnitt (456) des empfangenen Informationssignals (446) basieren, und
- Bestimmen von Positionsdaten eines das Informationssignal (446) aussendenden mobilen Endgeräts (130, 230, 330, 730), zumindest basierend auf den bereitgestellten Antennensignalen.

14. Kraftstoffabgabeanwendung (566, 666), insbesondere in Form einer durch einen Prozessor eines mobilen Endgeräts (130, 530, 630) ausführbaren Softwareanwendung (566, 666), zur Installation auf einem mobilen Endgerät (130, 530, 630), umfassend:
- mindestens ein Empfangsmodul (568), eingerichtet zum Empfangen von Antennensignalen, die zumindest auf den jeweiligen unmodulierten Signalabschnitten (456) von Einzelinformationssignalen (446, 564.1, 564.2, 564.3) eines durch eine Antenne (532, 632) des mobilen Endgeräts (130, 530, 630) empfangenen Gruppeninformationssignals (562, 662.2, 662.2) basieren,
- wobei das Gruppeninformationssignal (562, 662.2, 662.2) von einer einem Kraftstoffabgabepunkt (102, 602.1, 602.2) eines Kraftstoffabgabesystems (100, 200, 600) zugeordneten Gruppenantennenanordnung (108, 508, 608.1, 608.2) mit einer Mehrzahl von benachbart zueinander angeordneten Forecourt-Antennen (110, 210) ausgesendet wurde, und
- mindestens ein Positionsbestimmungsmodul (572), eingerichtet zum Bestimmen von Positionsdaten des das Gruppeninformationssignal (562, 662.2, 662.2) empfangenen mobilen Endgeräts (130, 530, 630), zumindest basierend auf dem unmodulierten Signalabschnitt (456) der Einzelinformationssignale (446, 564.1, 564.2, 564.3) des Gruppeninformationssignals (562, 662.2, 662.2).

15. Verfahren zum Betreiben einer Kraftstoffabgabeanwendung (566, 666), insbesondere einer Kraftstoffabgabeanwendung (566, 666) nach Anspruch 14, umfassend:
- Empfangen von Antennensignalen, die zumindest auf den jeweiligen unmodulierten Signalabschnitten (456) von Einzelinformationssignalen (446, 564.1, 564.2, 564.3) eines durch eine Antenne (532, 632) des mobilen Endgeräts (130, 530, 630) empfangenen Gruppeninformationssignals (562, 662.2, 662.2) basieren,
- wobei das Gruppeninformationssignal (562, 662.2, 662.2) von einer einem Kraftstoffabgabepunkt (102, 602.1, 602.2) eines Kraftstoffabgabesystems (100, 500, 600) zugeordneten Gruppenantennenanordnung (108, 508, 608.1, 608.2) mit einer Mehrzahl von benachbart zueinander angeordneten Forecourt-Antennen (110, 510) ausgesendet wurde, und
- Bestimmen von Positionsdaten des das Gruppeninformationssignal empfangenden mobilen Endgeräts (130, 530, 630), zumindest basierend auf dem unmodulierten Signalabschnitt (456) der Einzelinformationssignale (446, 564.1, 564.2, 564.3) des Gruppeninformationssignals (562, 662.2, 662.2).
